# EUROPEAN PATENT APPLICATION

(11) **EP 4 274 174 A1**
(43) Date of publication of application: **08.11.2023**
(21) Application number: 22745126.7
(22) Date of filing: 20.01.2022
(51) Int. Cl.: H04L 12/66, H04L 12/46

(54) **COMMUNICATION METHOD, SYSTEM, APPARATUS, DEVICE AND COMPUTER READABLE STORAGE MEDIUM**

(30) Priority: 29.01.2021 CN 202110128112; 26.05.2021 CN 202110579063
(71) Applicant: Huawei Technologies Co., Ltd., Shenzhen, Guangdong 518129 (CN)
(72) Inventor: YU, Zhouyi, Shenzhen, Guangdong 518129 (CN); HUA, Rongrong, Shenzhen, Guangdong 518129 (CN); PENG, Tao, Shenzhen, Guangdong 518129 (CN); WANG, Xiaokai, Shenzhen, Guangdong 518129 (CN)
(74) Representative: MERH-IP Matias Erny Reichl Hoffmann Patentanwälte PartG mbB
(86) International application number: PCT/CN2022/073017
(87) International publication number: WO 2022/161251

(57) **Abstract**

This application discloses a communication method, system, apparatus, and device, and a computer-readable storage medium, and belongs to the field of communication technologies. The method includes: When determining that UE is of a first type, a 5GC-CP device delivers a user entry corresponding to the UE to a first fixed network device, where the first fixed network device is a fixed network device corresponding to a first base station accessed by the UE. In this application, the 5GC-CP device enables the fixed network device to forward a packet related to the UE.

## Description

This application claims priority to Chinese Patent Application No. 202110128112.5, filed on January 29, 2021 and entitled "CONVERGED NETWORK SYSTEM, PACKET SENDING METHOD, AND APPARATUS", and further claims priority to Chinese Patent Application No. 202110579063.7, filed on May 26, 2021 and entitled "COMMUNICATION METHOD, SYSTEM, APPARATUS, AND DEVICE, AND COMPUTER-READABLE STORAGE MEDIUM", which are incorporated herein by reference in their entirety.

### TECHNICAL FIELD

This application relates to the field of communication technologies, and in particular, to a communication method, system, apparatus, and device, and a computer-readable storage medium.

### BACKGROUND

With the development of communication technologies, in addition to providing a mobile broadband (mobile broadband, MBB) service for user equipment (user equipment, UE) by using an MBB network, an operator may also provide a fixed broadband (fixed broadband, FBB) service for the LTE by using an FBB network.

In the MBB network, to support a 5th generation mobile network (5th generation mobile network, 5G), a 5G core (5G core, 5GC) is used as a gateway. The 5GC uses a CU separation architecture in which a control plane (control plane, CP) device is separated from a user plane (user plane, UP) device. Therefore, the 5GC includes a 5GC-CP device and a 5GC-UP device. In addition, both the MBB network and the FBB network include a fixed network device.

### SUMMARY

This application provides a communication method, system, apparatus, and device, and a computer-readable storage medium, so that a fixed network device can be configured to forward a packet related to LTE by using a 5GC-CP device. Technical solutions are as follows.

According to a first aspect, a communication method is provided, and the method includes: A 5GC-control plane CP device determines that UE is of a first type; and the 5GC-CP device delivers a user entry corresponding to the UE to a first fixed network device, where the first fixed network device is a fixed network device corresponding to a first base station accessed by the LTE. When the LTE is of the first type, the 5GC-CP device delivers the user entry corresponding to the UE to the fixed network device, so that the fixed network device can be used to forward the packet related to the UE.

For example, the UE of the first type means that the UE communicates with a destination network by using the first fixed network device, that is, a packet related to the UE is forwarded by the first fixed network device, so that the packet is normally transmitted between the UE and the destination network.

Alternatively, the UE of the first type means that the UE communicates with a destination network by using the first fixed network device, the UE does not communicate with the destination network by using the 5GC-UP device, and a packet related to the UE can be normally transmitted between the UE and the destination network without being forwarded by the 5GC-UP device. In this case, when the UE is of the first type, because the packet related to the UE is not forwarded by the 5GC-UP device, traffic that originally passes through the 5GC-UP device is offloaded to the first fixed network device. Therefore, the first type may also be understood as a traffic offloading type.

In a possible implementation, the method further includes: When the 5GC-CP device detects that a base station accessed by the LTE is switched from the first base station to a second base station, the 5GC-CP device determines a second fixed network device corresponding to the second base station. The 5GC-CP device delivers the user entry corresponding to the UE to the second fixed network device. Because movement of the UE causes a change of the base station accessed by the UE, the 5GC-CP device actively delivers the user entry corresponding to the UE to the second fixed network device, so that the second fixed network device forwards, based on the user entry corresponding to the UE, the packet related to the UE.

In a possible implementation, the method further includes: The 5GC-CP device receives a user entry obtaining request sent by a second fixed network device, where the second fixed network device is a fixed network device corresponding to a second base station to which the LTE is handed over from the accessed first base station. The 5GC-CP device sends, based on the user entry obtaining request, the user entry corresponding to the LTE to the second fixed network device. After movement of the UE causes a change of the base station accessed by the UE, the 5GC-CP device returns, to the second fixed network device, the user entry corresponding to the LTE based on the request of the second fixed network device, so that the second fixed network device forwards, based on the user entry corresponding to the UE, the packet related to the UE.

In a possible implementation, the method further includes: The 5GC-CP device sends control information to the first fixed network device. The 5GC-CP device receives traffic statistics information returned by the first fixed network device based on the control information, and performs traffic management based on the traffic statistics information. Traffic management is implemented between the 5GC-CP device and the first fixed network device by exchanging the control information and the traffic statistics information.

In a possible implementation, the first fixed network device includes a broadband network gateway BNG device or a metropolitan area network edge device. The first fixed network device may be a BNG device or a metropolitan area network edge device, which is relatively flexible.

In a possible implementation, the first fixed network device includes a broadband network gateway user plane BNG-UP device, and that the 5GC-CP device delivers the user entry corresponding to the UE to the first fixed network device includes: The 5GC-CP device delivers the user entry corresponding to the UE to a BNG-CP device, and sends, by using the BNG-CP device, the user entry corresponding to the UE to the BNG-UP device. When the BNG device uses a CU separation architecture, the 5GC-CP device delivers the user entry corresponding to the UE to the BNG-CP device, and the BNG-CP device delivers the user entry corresponding to the LTE to the first fixed network device.

In a possible implementation, the method further includes: The 5GC-CP device determines that the UE is of a second type; and the 5GC-CP device delivers, to the 5GC-user plane UP device, the user entry corresponding to the UE. When the UE is of the second type, the 5GC-UP device forwards the packet related to the UE. In addition, different processing manners are used based on different types of the UE, so that traffic management is more flexible, and resource management of the 5GC-UP device is more accurate.

According to a second aspect, a communication method is provided, and the method includes: A first fixed network device receives a user entry that corresponds to LTE and that is delivered by a 5GC-CP device, where the first fixed network device is a fixed network device corresponding to a first base station accessed by the UE, and the UE is of a first type; and the first fixed network device forwards a packet related to the LTE based on the user entry corresponding to the LTE. When the LTE is of the first type, the 5GC-CP device delivers the user entry corresponding to the UE to the fixed network device, so that the fixed network device can be used to forward the packet related to the UE.

For example, the UE of the first type means that the UE communicates with a destination network by using the first fixed network device, that is, a packet related to the UE is forwarded by the first fixed network device, so that the packet is normally transmitted between the UE and the destination network.

Alternatively, the UE of the first type means that the UE communicates with a destination network by using the first fixed network device, the UE does not communicate with the destination network by using the 5GC-UP device, and a packet related to the UE can be normally transmitted between the UE and the destination network without being forwarded by the 5GC-UP device. In this case, when the UE is of the first type, because the packet related to the UE is not forwarded by the 5GC-UP device, traffic that originally passes through the 5GC-UP device is offloaded to the first fixed network device. Therefore, the first type may also be understood as a traffic offloading type.

In a possible implementation, the packet related to the UE includes a packet sent by the UE, and that the first fixed network device forwards the packet related to the UE based on the user entry corresponding to the UE includes: The first fixed network device receives, through a tunnel, the packet sent by the UE, where the tunnel is located between the first base station and the first fixed network device; the first fixed network device deletes a first tunnel packet header in the packet sent by the UE, to obtain a first update packet, where the first tunnel packet header is used to transmit, through the tunnel, the packet sent by the UE from the first base station to the first fixed network device; and the first fixed network device forwards the first update packet based on the user entry corresponding to the UE. In a case in which the packet related to the UE includes an uplink packet, after deleting the first tunnel packet header in the uplink packet, the first fixed network device forwards the obtained first update packet. The first tunnel packet header is used to transmit the uplink packet from the first base station to the first fixed network device. Because the first tunnel packet header is no longer required in a subsequent forwarding process, the first fixed network device deletes the first tunnel packet header.

In a possible implementation, the first fixed network device corresponds to a first public network address, the UE corresponds to a private network address allocated by the 5GC-CP device, and before the first fixed network device forwards the first update packet based on the user entry corresponding to the UE, the method further includes: The first fixed network device translates a source Internet protocol IP address in the first update packet from the private network address into the first public network address. Before forwarding the first update packet, the first fixed network device translates the source IP address in the first update packet from the private network address of the UE into the first public network address of the first fixed network device, so that a packet returned for the first update packet can be normally routed to the first fixed network device, and the first fixed network device forwards the packet returned for the first update packet to the UE.

In a possible implementation, the UE corresponds to a private network address allocated by the 5GC-CP device, and that the first fixed network device forwards the first update packet based on the user entry corresponding to the UE includes: The first fixed network device sends the first update packet to a target device based on the user entry corresponding to the UE, where the target device is configured to translate a source Internet protocol IP address in the first update packet from the private network address into a second public network address corresponding to a third fixed network device, and the target device includes the third fixed network device or a network address translation NAT device. The first fixed network device forwards the first update packet to another device, and the another device translates the source IP address in the first update packet from the private network address of the LTE into the second public network address of the third fixed network device. For example, the third fixed network device is a fixed network device that has forwarded the packet related to the UE. By using the address translation process, it can be ensured that the UE still accesses a destination network by using the second public network address of the third fixed network device, that is, it is ensured that the public network address used by the UE to access the destination network remains unchanged.

In a possible implementation, the packet related to the UE includes a packet sent to the UE, and that the first fixed network device forwards the packet related to the UE based on the user entry corresponding to the LTE includes: The first fixed network device receives the packet sent to the UE; the first fixed network device adds a second tunnel packet header to the packet sent to the LTE, to obtain a second update packet, where the second tunnel packet header is used to transmit, through a tunnel, the packet sent to the UE from the first fixed network device to the first base station, and the tunnel is located between the first base station and the first fixed network device; and the first fixed network device forwards the second update packet to the UE through the tunnel. In a case in which the packet related to the LTE includes a downlink packet, after adding the second tunnel packet header to the downlink packet, the first fixed network device forwards the obtained second update packet, so that the second update packet can be transmitted from the first fixed network device to the first base station.

In a possible implementation, the method further includes: The first fixed network device receives control information sent by the 5GC-CP device, performs traffic control on the UE based on the control information, obtains traffic statistics information of the UE, and sends the traffic statistics information to the 5GC-CP device, where the traffic statistics information is used by the 5GC-CP device to perform traffic management. Traffic management is implemented between the 5GC-CP device and the first fixed network device by exchanging the control information and the traffic statistics information.

In a possible implementation, the first fixed network device includes a broadband network gateway BNG device or a metropolitan area network edge device. The first fixed network device may be a BNG device or a metropolitan area network edge device, which is relatively flexible.

In a possible implementation, the first fixed network device includes a broadband network gateway user plane BNG-UP device, and that the first fixed network device receives the user entry that corresponds to the user equipment LTE and that is delivered by the 5th generation mobile communication technology core 5GC-control plane CP device includes: The BNG-UP device receives the user entry that corresponds to the UE and that is delivered by a BNG-CP device. When the BNG device uses a CU separation architecture, the 5GC-CP device delivers the user entry corresponding to the LTE to the BNG-CP device. Correspondingly, the first fixed network device receives, from the BNG-CP device, the user entry corresponding to the UE.

According to a third aspect, a communication method is provided. The method includes the following steps.

A 5GC-CP device determines that UE is of a first type.

The 5GC-CP device delivers a user entry corresponding to the UE to a first fixed network device, where the first fixed network device is a fixed network device corresponding to a first base station accessed by the UE.

The first fixed network device forwards a packet related to the UE based on the user entry corresponding to the UE.

In a possible implementation, the method further includes: The 5GC-CP device determines that the UE is of a second type, and the 5GC-CP device delivers the user entry corresponding to the UE to a 5GC- user plane UP device; and the 5GC-UP device forwards the packet related to the UE based on the user entry corresponding to the UE.

In a possible implementation, the method further includes: When the 5GC-CP device detects that a base station accessed by the LTE is switched from the first base station to a second base station, the 5GC-CP device determines a second fixed network device corresponding to the second base station, and delivers the user entry corresponding to the UE to the second fixed network device. The second fixed network device forwards the packet related to the LTE based on the user entry corresponding to the UE.

In a possible implementation, the method further includes: The 5GC-CP device receives a user entry obtaining request sent by the second fixed network device, and sends, based on the user entry obtaining request, the user entry corresponding to the UE to the second fixed network device, where the second fixed network device is a fixed network device corresponding to a second base station to which the UE is handed over from the accessed first base station. The second fixed network device forwards the packet related to the UE based on the user entry corresponding to the UE.

In a possible implementation, the packet related to the UE includes a packet sent by the UE, and that the first fixed network device forwards the packet related to the UE based on the user entry corresponding to the UE includes: The first fixed network device receives, through a tunnel, the packet sent by the UE, where the tunnel is located between the first base station and the first fixed network device; the first fixed network device deletes a first tunnel packet header in the packet sent by the UE, to obtain a first update packet, where the first tunnel packet header is used to transmit, through the tunnel, the packet sent by the UE from the first base station to the first fixed network device; and the first fixed network device forwards the first update packet based on the user entry corresponding to the UE.

In a possible implementation, the first fixed network device corresponds to a first public network address, the UE corresponds to a private network address allocated by the 5GC-CP device, and the method further includes: The first fixed network device translates a source Internet protocol IP address in the first update packet from the private network address into the first public network address.

In a possible implementation, the UE corresponds to a private network address allocated by the 5GC-CP device, and that the first fixed network device forwards the first update packet based on the user entry corresponding to the UE includes: The first fixed network device sends the first update packet to a target device based on the user entry corresponding to the UE, where the target device includes a third fixed network device or a NAT device; and the target device receives the first update packet, translates a source Internet protocol IP address in the first update packet from the private network address into a second public network address corresponding to a third fixed network device, and forwards the first update packet, where the third fixed network device is a fixed network device that has forwarded the packet sent by the UE.

In a possible implementation, the packet related to the UE includes a packet sent to the UE, and that the first fixed network device forwards the packet related to the UE based on the user entry corresponding to the LTE includes: The first fixed network device receives the packet sent to the UE; the first fixed network device adds a second tunnel packet header to the packet sent to the LTE, to obtain a second update packet, where the second tunnel packet header is used to transmit, through a tunnel, the packet sent to the UE from the first fixed network device to the first base station, and the tunnel is located between the first base station and the first fixed network device; and the first fixed network device forwards the second update packet to the UE through the tunnel.

In a possible implementation, the method further includes: The first fixed network device receives control information sent by the 5GC-CP device, performs traffic control on the UE based on the control information, obtains traffic statistics information of the UE, and sends the traffic statistics information to the 5GC-CP device. The 5GC-CP device performs traffic management based on the traffic statistics information.

In a possible implementation, the first fixed network device includes a broadband network gateway BNG device or a metropolitan area network edge device.

In a possible implementation, the first fixed network device includes a broadband network gateway user plane BNG-UP device. That the 5GC-CP device delivers the user entry corresponding to the UE to the first fixed network device includes: The 5GC-CP device delivers the user entry corresponding to the UE to a BNG-CP device. That the first fixed network device receives the user entry that corresponds to the user equipment UE and that is delivered by the 5GC-CP device includes: The BNG-UP device receives the user entry that corresponds to the UE and that is delivered by the BNG-CP device.

According to a fourth aspect, a communication system is provided, and the system includes a 5th generation mobile communication technology core 5GC-control plane CP device and a first fixed network device.

The 5GC-CP device is configured to: determine that user equipment UE is of a first type, and deliver a user entry corresponding to the UE to the first fixed network device, where the first fixed network device is a fixed network device corresponding to a first base station accessed by the UE.

The first fixed network device forwards a packet related to the UE based on the user entry corresponding to the UE.

In a possible implementation, the 5GC-CP device is further configured to: determine that the UE is of a second type, and deliver, to a 5GC- user plane UP device, the user entry corresponding to the UE. The 5GC-UP device is configured to forward the packet related to the UE based on the user entry corresponding to the UE.

In a possible implementation, the 5GC-CP device is further configured to: when detecting that a base station accessed by the LTE is switched from the first base station to a second base station, determine a second fixed network device corresponding to the second base station, and deliver the user entry corresponding to the LTE to the second fixed network device. The second fixed network device is configured to forward the packet related to the UE based on the user entry corresponding to the UE.

In a possible implementation, the 5GC-CP device is further configured to: receive a user entry obtaining request sent by the second fixed network device, and send, based on the user entry obtaining request, the user entry corresponding to the UE to the second fixed network device, where the second fixed network device is a fixed network device corresponding to the second base station to which the UE is handed over from the accessed first base station. The second fixed network device is configured to forward the packet related to the UE based on the user entry corresponding to the UE.

In a possible implementation, the packet related to the UE includes a packet sent by the UE, and the first fixed network device is configured to receive, through a tunnel, the packet sent by the UE, where the tunnel is located between the first base station and the first fixed network device; the first fixed network device is configured to delete a first tunnel packet header in the packet sent by the UE, to obtain a first update packet, where the first tunnel packet header is used to transmit, through the tunnel, the packet sent by the UE from the first base station to the first fixed network device; the first fixed network device is configured to forward the first update packet based on the user entry corresponding to the UE.

In a possible implementation, the first fixed network device corresponds to a first public network address, the UE corresponds to a private network address allocated by the 5GC-CP device, and the first fixed network device is further configured to translate a source Internet protocol IP address in the first update packet from the private network address into the first public network address.

In a possible implementation, the UE corresponds to a private network address allocated by the 5GC-CP device, and the first fixed network device is configured to send the first update packet to a target device based on the user entry corresponding to the UE, where the target device includes a third fixed network device or a network address translation NAT device; and the target device is configured to receive the first update packet, translate a source Internet protocol IP address in the first update packet from the private network address into a second public network address corresponding to a third fixed network device, and forward the first update packet, where the third fixed network device is a fixed network device that has forwarded the packet sent by the UE.

In a possible implementation, the packet related to the UE includes a packet sent to the UE, and the first fixed network device is configured to receive the packet sent to the UE; the first fixed network device is configured to add a second tunnel packet header to the packet sent to the LTE, to obtain a second update packet, where the second tunnel packet header is used to transmit, through a tunnel, the packet sent to the UE from the first fixed network device to the first base station, and the tunnel is located between the first base station and the first fixed network device; and the first fixed network device is configured to forward the second update packet to the UE through the tunnel.

In a possible implementation, the first fixed network device is configured to receive control information sent by the 5GC-CP device, perform traffic control on the UE based on the control information, obtain traffic statistics information of the UE, and send the traffic statistics information to the 5GC-CP device. The 5GC-CP device is configured to perform traffic management based on the traffic statistics information.

In a possible implementation, the first fixed network device includes a broadband network gateway BNG device or a metropolitan area network edge device.

In a possible implementation, the first fixed network device includes a broadband network gateway user plane BNG-UP device, the 5GC-CP device is configured to deliver the user entry corresponding to the UE to the BNG-CP device, and the BNG-CP is configured to deliver the user entry corresponding to the UE to the BNG-UP device.

According to a fifth aspect, a communication apparatus is provided. The apparatus includes:
a determining module, configured to determine, by a 5th generation mobile communication technology core 5GC-control plane CP device, that user equipment UE is of a first type; and
a delivering module, configured to: deliver, by the 5GC-CP device, a user entry corresponding to the UE to a first fixed network device, where the first fixed network device is a fixed network device corresponding to a first base station accessed by the UE.

In a possible implementation, the determining module is further configured to: when the 5GC-CP device detects that a base station accessed by the UE is switched from the first base station to a second base station, determine, by the 5GC-CP device, a second fixed network device corresponding to the second base station.

The delivering module is further configured to: deliver, by the 5GC-CP device to the second fixed network device, the user entry corresponding to the UE.

In a possible implementation, the apparatus further includes a receiving module, configured to: receive, by the 5GC-CP device, a user entry obtaining request sent by a second fixed network device, where the second fixed network device is a fixed network device corresponding to a second base station to which the LTE is handed over from the accessed first base station.

The delivering module is further configured to: send, by the 5GC-CP device based on the user entry obtaining request, the user entry corresponding to the LTE to the second fixed network device.

In a possible implementation, the delivering module is further configured to: send, by the 5GC-CP device, control information to the first fixed network device; and receive, by the 5GC-CP device, traffic statistics information returned by the first fixed network device based on the control information, and perform traffic management based on the traffic statistics information.

In a possible implementation, the first fixed network device includes a broadband network gateway BNG device or a metropolitan area network edge device.

In a possible implementation, the first fixed network device includes a broadband network gateway user plane BNG-UP device, the delivering module is configured to: deliver, by the 5GC-CP device, the user entry corresponding to the UE to a BNG-CP device, and send, by using the BNG-CP device, the user entry corresponding to the UE to the BNG-UP device.

In a possible implementation, the determining module is further configured to determine, by the 5GC-CP device, that the UE is of a second type.

The delivering module is further configured to: deliver, by the 5GC-CP device to a 5GC- user plane UP device, the user entry corresponding to the UE.

According to a sixth aspect, a communication apparatus is provided. The apparatus includes:
a receiving module, configured to receive, by a first fixed network device, a user entry that corresponds to user equipment UE and that is delivered by a 5th generation mobile communication technology core 5GC-control plane CP device, where the first fixed network device is a fixed network device corresponding to a first base station accessed by the UE, and the UE is of a first type; and
a forwarding module, configured to: forward, by the first fixed network device, a packet related to the UE based on the user entry corresponding to the UE.

In a possible implementation, the packet related to the UE includes a packet sent by the UE, and forwarding module is configured to: receive, by the first fixed network device through a tunnel, the packet sent by the UE, where the tunnel is located between the first base station and the first fixed network device; delete, by the first fixed network device, a first tunnel packet header in the packet sent by the UE, to obtain a first update packet, where the first tunnel packet header is used to transmit, through the tunnel, the packet sent by the UE from the first base station to the first fixed network device; and forward, by the first fixed network device, the first update packet based on the user entry corresponding to the UE.

In a possible implementation, the first fixed network device corresponds to a first public network address, the UE corresponds to a private network address allocated by the 5GC-CP device, and the forwarding module is further configured to: translate, by the first fixed network device, a source Internet protocol IP address in the first update packet from the private network address into the first public network address.

In a possible implementation, the UE corresponds to a private network address allocated by the 5GC-CP device, and the forwarding module is configured to: send, by the first fixed network device, the first update packet to a target device based on the user entry corresponding to the UE, where the target device is configured to translate a source IP address in the first update packet from the private network address into a second public network address corresponding to a third fixed network device and then forward the first update packet, and the target device includes the third fixed network device or a network address translation NAT device.

In a possible implementation, the packet related to the UE includes a packet sent to the UE, and the forwarding module is configured to: receive, by the first fixed network device, the packet sent to the UE; add, by the first fixed network device, a second tunnel packet header to the packet sent to the UE, to obtain a second update packet, where the second tunnel packet header is used to transmit, through a tunnel, the packet sent to the LTE from the first fixed network device to the first base station, and the tunnel is located between the first base station and the first fixed network device; and forward, by the first fixed network device, the second update packet to the UE through the tunnel.

In a possible implementation, the receiving module is further configured to: receive, by the first fixed network device, control information sent by the 5GC-CP device, perform traffic control on the UE based on the control information, obtain traffic statistics information of the UE, and send the traffic statistics information to the 5GC-CP device, where the traffic statistics information is used by the 5GC-CP device to perform traffic management.

In a possible implementation, the first fixed network device includes a broadband network gateway BNG device or a metropolitan area network edge device.

In a possible implementation, the first fixed network device includes a broadband network gateway user plane BNG-UP device, and the receiving module is configured to: receive, by the BNG-UP device, the user entry that corresponds to the UE and that is delivered by a BNG-CP device.

According to a seventh aspect, a communication device is provided. The device includes a memory and a processor. The memory stores at least one instruction, and the processor loads and executes the at least one instruction, so that the device implements the communication method provided in the first aspect or any one of the possible implementations of the first aspect.

According to an eighth aspect, a communication device is provided. The device includes a memory and a processor. The memory stores at least one instruction, and the processor loads and executes the at least one instruction, so that the device implements the method provided in the second aspect or any one of the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

According to a ninth aspect, a communication system is provided. The communication system includes the communication device according to the eighth aspect or any one of the possible implementations of the eighth aspect and the communication device according to the ninth aspect or any one of the possible implementations of the ninth aspect.

According to a tenth aspect, a computer program (product) is provided. The computer program (product) includes computer program code. When the computer program code is run by a computer, the computer is enabled to perform the methods in the foregoing aspects.

According to an eleventh aspect, a computer-readable storage medium is provided. The computer-readable storage medium stores a program or instructions. When the program or the instructions are run on a computer, the methods in the foregoing aspects are performed.

According to a twelfth aspect, a chip is provided, including a processor, and the processor is configured to invoke, from a memory, and run instructions stored in the memory, so that a communication device on which the chip is installed performs the methods in the foregoing aspects.

According to a thirteenth aspect, another chip is provided, including an input interface, an output interface, a processor, and a memory. The input interface, the output interface, the processor, and the memory are connected through an internal connection path. The processor is configured to execute code in the memory, and when the code is executed, the processor is configured to perform the methods in the foregoing aspects.

### BRIEF DESCRIPTION OF DRAWINGS

FIG. 1 is a schematic diagram of an implementation environment according to an embodiment of this application;
FIG. 2 is a schematic diagram of an architecture of a 5GC according to an embodiment of this application;
FIG. 3 is a schematic diagram of an implementation environment according to an embodiment of this application;
FIG. 4 is a schematic diagram of an architecture of a BNG according to an embodiment of this application;
FIG. 5 is a schematic diagram of an implementation environment according to an embodiment of this application;
FIG. 6 is a schematic diagram of an architecture of a vBNG according to an embodiment of this application;
FIG. 7 is a schematic diagram of an implementation environment according to an embodiment of this application;
FIG. 8 is a schematic diagram of an architecture of an FMC-CP according to an embodiment of this application;
FIG. 9 is a schematic diagram of an architecture of an FMC-CP according to an embodiment of this application;
FIG. 10 is a schematic flowchart of a communication method according to an embodiment of this application;
FIG. 11 is a schematic diagram of a structure of a forwarding model according to an embodiment of this application.
FIG. 12 is a schematic diagram of a structure of a packet according to an embodiment of this application;
FIG. 13 is a schematic diagram of a structure of a packet according to an embodiment of this application;
FIG. 14 is a schematic flowchart of a communication method according to an embodiment of this application;
FIG. 15 is a schematic flowchart of a communication method according to an embodiment of this application;
FIG. 16A and FIG. 16B are a schematic flowchart of a communication method according to an embodiment of this application;
FIG. 17A and FIG. 17B are a schematic flowchart of a communication method according to an embodiment of this application;
FIG. 18 is a schematic flowchart of a communication system according to an embodiment of this application;
FIG. 19 is a schematic diagram of a structure of a communication apparatus according to an embodiment of this application;
FIG. 20 is a schematic diagram of a structure of a communication apparatus according to an embodiment of this application; and
FIG. 21 is a schematic diagram of a structure of a communication device according to an embodiment of this application.

### DESCRIPTION OF EMBODIMENTS

Terms used in embodiments of this application are only used to explain specific embodiments of this application, but are not intended to limit this application.

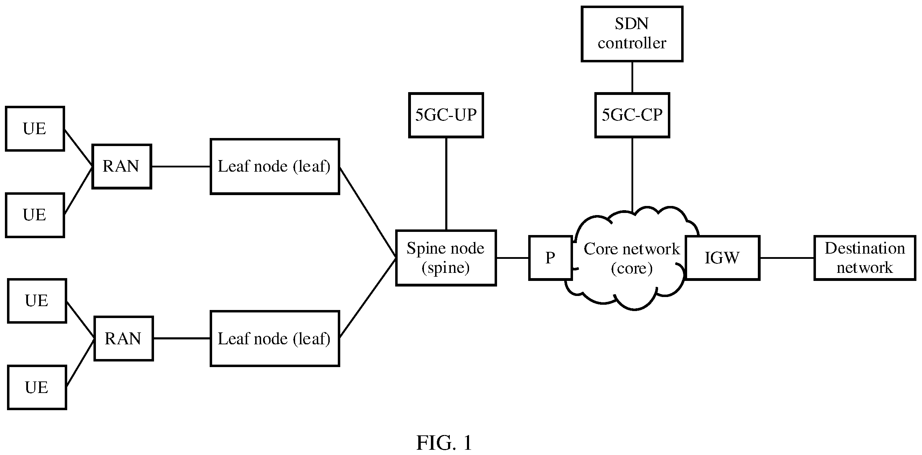

An embodiment of this application provides a communication method, and the method can be applied to a plurality of different implementation environments. In FIG. 1 to FIG. 9, the implementation environments are described separately. It can be understood that each of the following implementation environments is merely used as an example, and is not intended to limit the implementation environment. In an actual application process, the communication method provided in this embodiment can also be applied to another implementation environment.

Implementation environment 1: Refer to FIG. 1. The implementation environment 1 includes LTE, a radio access network (radio access network, RAN), a metropolitan area network, a 5GC, a software-defined network (software-defined network, SDN) controller, a core (core) network (telecom cloud), and a destination network. The UE, the RAN, the metropolitan area network, the core network, and the destination network are communicatively connected in sequence. The core network is communicatively connected to the metropolitan area network by using a service provider (provider, P) device. The destination network is, for example, an Internet (Internet). The destination network is not limited in this embodiment. In a case in which the destination network is the Internet, the core network is communicatively connected to the destination network by using an Internet gateway (Internet gateway, IGW) device. The 5GC uses a CU separation architecture in which a control plane (control plane, CP) device is separated from a user plane (user plane, UP) device. Therefore, the 5GC includes a 5GC-CP device and a 5GC-UP device. The 5GC-CP device is communicatively connected to the core network and the SDN controller, and the 5GC-UP device is communicatively connected to the metropolitan area network.

For example, the metropolitan area network includes but is not limited to an Internet protocol (Internet protocol, IP) RAN and a packet transport network (packet transport network, PTN). The metropolitan area network includes a cell site gateway (cell site gate, CSG), an access service gateway (access service gateway, ASG), and a wireless service gateway (radio service gateway, RSG) that are communicatively connected in sequence. The RAN is communicatively connected to the CSG, and the RSG is communicatively connected to the core network. A CSG-ASG-RSG architecture is also referred to as a spine-leaf (spine-leaf) architecture. The spine-leaf architecture includes a spine node and a leaf node, and the leaf node is also referred to as an edge node. For example, the leaf node includes the CSG, and the spine node includes the ASG and the RSG. Alternatively, the leaf node includes the ASG, the spine node includes the RSG, and the CSG is communicatively connected to the ASG after forming a ring network. Based on the spine-leaf architecture of the metropolitan area network, that the 5GC-UP device is communicatively connected to the metropolitan area network includes: The 5GC-UP device is communicatively connected to the spine node of the metropolitan area network.

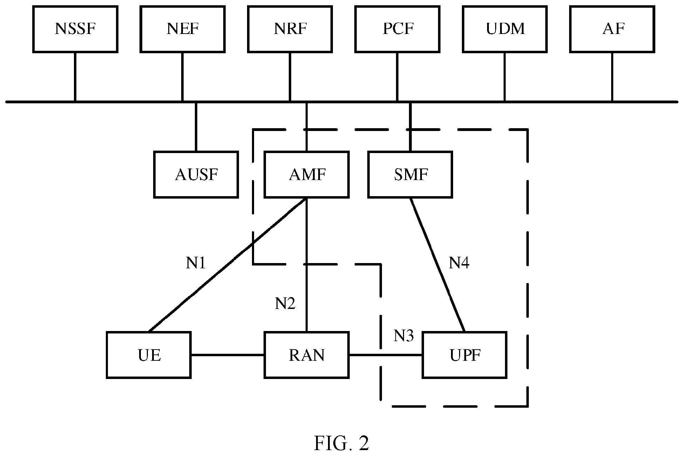

Refer to FIG. 2. FIG. 2 shows an example architecture of the 5GC. The 5GC-CP device includes an access and mobility management function (access and mobility management function, AMF) module and a session management function (session management function, SMF) module in FIG. 2. An N1 interface is included between the UE and the AMF module, and an N2 interface is included between the RAN and the AMF module. The 5GC-UP device includes a user plane function (user plane function, UPF) module in FIG. 2. An N3 interface is included between the RAN and the UPF module, and an N4 interface is included between the SMF module and the UPF module.

Further, in addition to the foregoing AMF module, SMF module, and UPF module, the 5GC further includes a network slice selection function (network slice selection function, NSSF) module, a network exposure function (network exposure function, NEF) module, a network function repository function (network function repository function, NRF) module, a policy control function (policy control function, PCF) module, a unified data management (unified data management, UDM) module, an application function (application function, AF) module, and an authentication server function (authentication server function, AUSF) module.

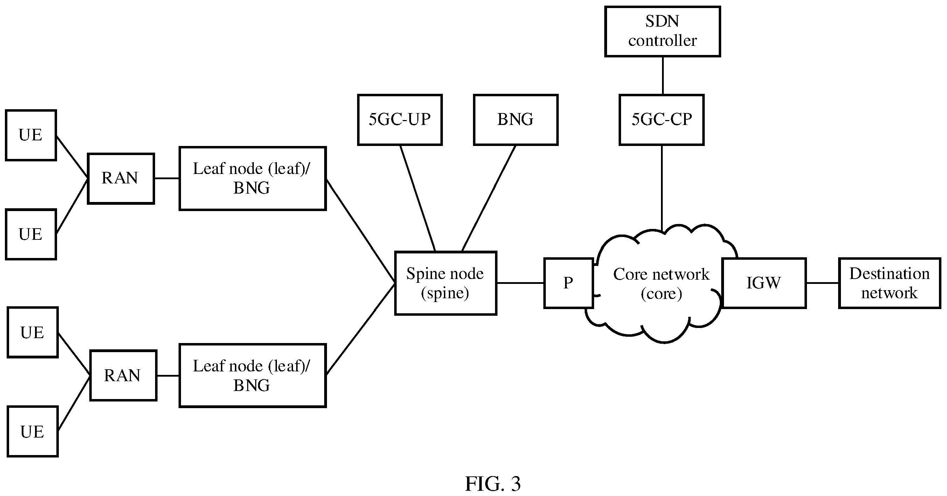

Implementation environment 2: As shown in FIG. 3, on the basis of the implementation environment 1, a broadband network gateway (broadband network gateway, BNG) device is further added. The BNG device in the second implementation environment includes at least one of the following devices: a BNG device (represented as BNG in FIG. 3) communicatively connected to the spine node in the metropolitan area network, a leaf node in the metropolitan area network (represented as leaf/BNG in FIG. 3) that is also used as a BNG device, and the leaf node used as the BNG device is also referred to as integrating of the leaf node and the BNG device. A reason why the leaf node can also be used as the BNG device is that the leaf node is an IP device that performs forwarding based on a network processor (network processor, NP), and can be used to carry 800 gigabytes (Gigabytes, G) of traffic.

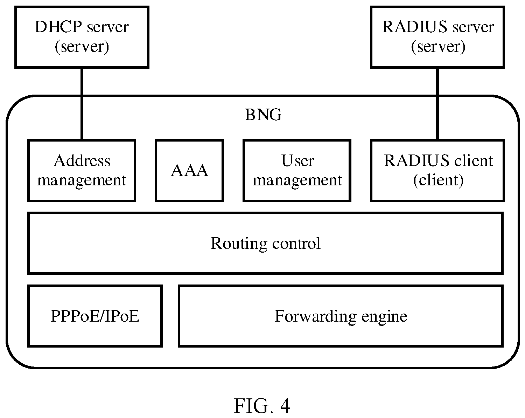

As shown in FIG. 4, the BNG device includes an address management module, an authentication authorization accounting (authentication authorization accounting, AAA) module, a user management module, a remote authentication dial in user service (remote authorization dial in user service, RADIUS) client (client) module, a Point-to-Point protocol over Ethernet (point-to-point protocol over ethernet, PPPoE)/Internet protocol over Ethernet (IP over Ethernet, IPoE) module, a routing control module, and a forwarding engine module. The address management module is communicatively connected to a Dynamic Host Configuration Protocol (dynamic host configuration protocol, DHCP) server (server), to apply for an IP address from the DHCP server through a DHCP protocol. The RADIUS client module is communicatively connected to a RADIUS server, to obtain a user access policy through communication with the RADIUS server, where the user access policy is used by the AAA module to perform authentication, authorization, and accounting on a user.

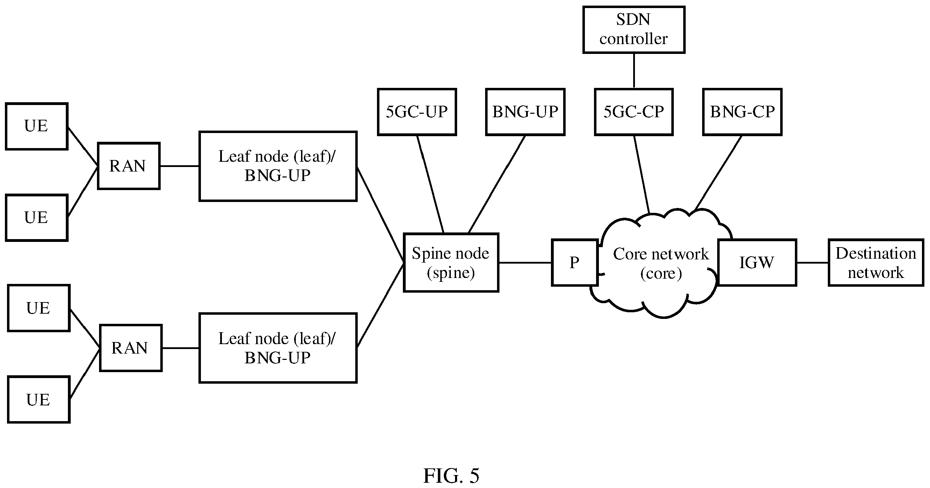

Implementation environment 3: As shown in FIG. 5, on the basis of the implementation environment 1, a virtual BNG (virtual BNG, vBNG) device is further added, and the vBNG device includes a BNG-CP device and a BNG-UP device. The BNG device includes the vBNG device, and the vBNG device may be considered as a BNG device using a CU separation architecture. The BNG-CP device is communicatively connected to the core network, and the BNG-UP device includes at least one of the following devices: a BNG-UP device (represented as BNG-UP in FIG. 5) communicatively connected to the spine node in the metropolitan area network, and a leaf node in the metropolitan area network that is also used as a BNG-UP device (represented as leaf/BNG-UP in FIG. 5).

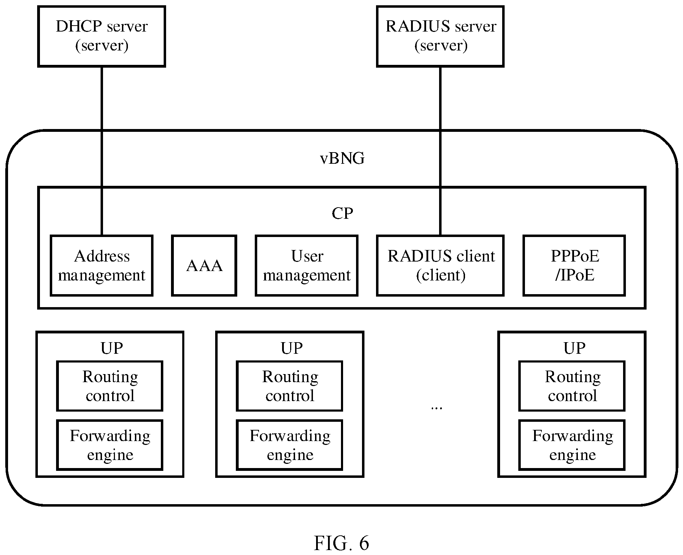

Refer to FIG. 6. In the vBNG device, the BNG-CP device includes an address management module, an AAA module, a user management module, a RADIUS client module, and a PPPoE/IPoE module, and a BNG-UP device includes a routing control module and a forwarding engine module.

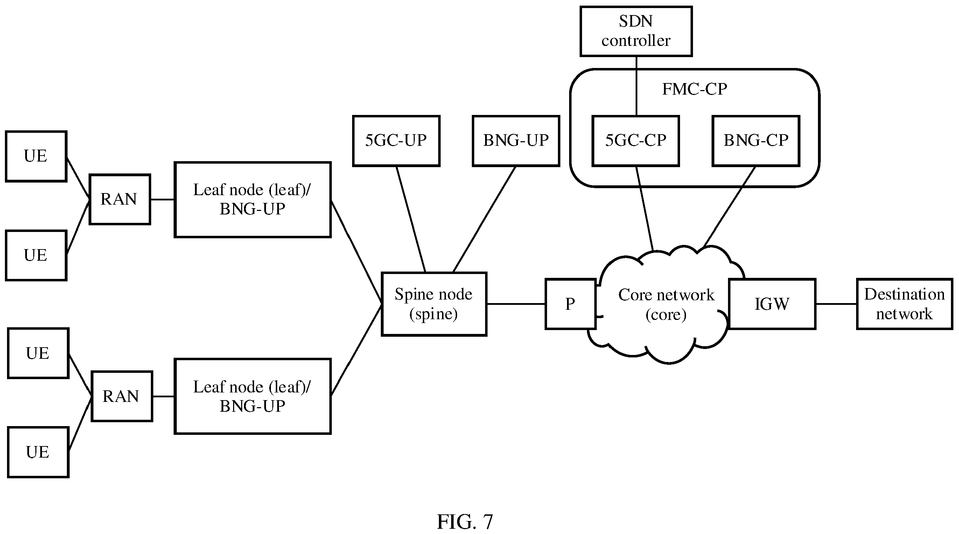

Implementation environment 4: Refer to FIG. 7. On the basis of the implementation environment 3, in this embodiment, the BNG-CP device in the vBNG device is further converged with the 5GC-CP device, to form a fixed mobile convergence (fixed mobile convergence, FMC)-CP device. A reason why the 5GC-CP device can be converged with the BNG-CP device is that both the 5GC-CP device and the BNG-CP device use a network functions virtualization (network functions virtualization, NFV) architecture, and are communicatively connected to the core network (telecom cloud). For example, the FMC-CP device includes but is not limited to the following two architectures.

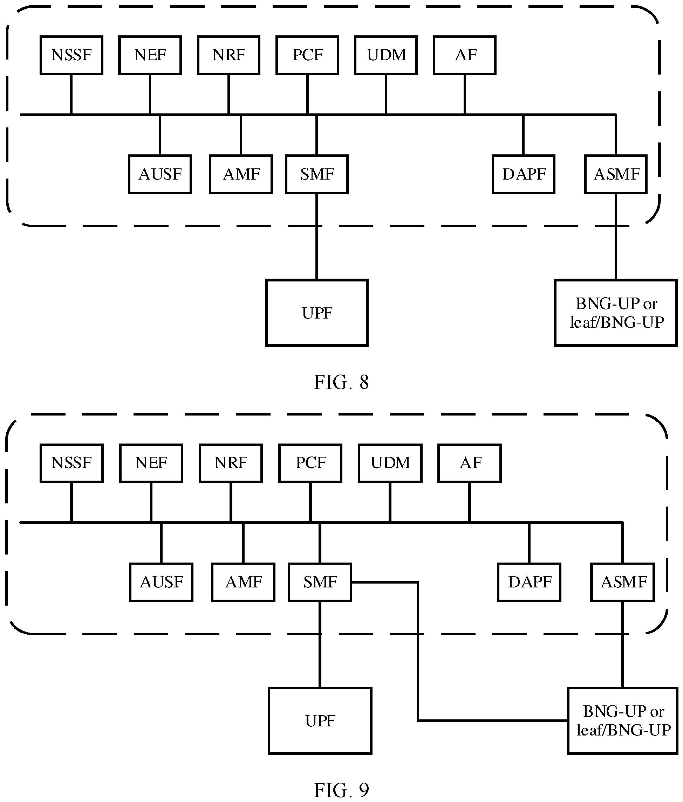

Architecture 1 of the FMC-CP device: Refer to FIG. 8. A dynamic address pool function (dynamic address pool function, DAPF) module and an access session management function (access session management function, ASMF) module are added on the basis of modules included in the 5GC-CP device, to form the architecture 1 of the FMC-CP device. The DAPF module is configured to replace the address management module in the BNG-CP device, and the ASMF module is configured to replace the AAA module, the user management module, the RADIUS client module, and the PPPoE/IPoE module in the BNG-CP device. For example, the DAPF module can also be configured to replace a function of the AMF model in the 5GC-CP device in terms of IP address allocation.

Architecture 2 of the FMC-CP device: As shown in FIG. 9, on the basis of the architecture 1 of the FMC-CP device, the SMF module is directly connected to the BNG-UP device by using the N4 interface, to form the architecture 2 of the FMC-CP device. A reason why the SMF module can be directly connected to the BNG-UP device by using the N4 interface is as follows: According to the technical report (technical report, TR)-459 released by the Broadband Forum (broadband forum, BBF), an interface between the BNG-CP device and the BNG-UP device is a Packet Forwarding Control Protocol (packet forwarding control protocol, PFCP) interface of the 3rd Generation Partnership Project (3rd generation partnership project, 3GPP), and is consistent with the N4 interface between the SMF module and the BNG-UP device.

It should be noted that the foregoing implementation environment 1 is also referred to as an MBB architecture, and the foregoing BNG device or vBNG device belongs to the fixed broadband (fixed broadband, FBB) architecture. Therefore, the implementation environment 2, the implementation environment 3, and the implementation environment 4 may be considered as convergence of the MBB architecture and the FBB architecture. It can be learned that the communication method provided in embodiments of this application can be applied to both an MBB architecture and an architecture in which the MBB and the FBB are converged.

Based on the implementation environments shown in FIG. 1 to FIG. 9, an embodiment of this application provides a communication method. The communication method is used for interaction between a 5GC-CP device and a first fixed network device. For example, in the implementation environment 1 shown in FIG. 1, the first fixed network device includes an edge node of a metropolitan area network. In the implementation environment 2 shown in FIG. 3, the first fixed network device includes a BNG device, or includes an edge node of a metropolitan area network that is used as a BNG device. In the implementation environment 3 shown in FIG. 5 and the implementation environment 4 shown in FIG. 7, the first fixed network device includes a BNG-UP device, or includes an edge node of a metropolitan area network that is used as a BNG-UP device.

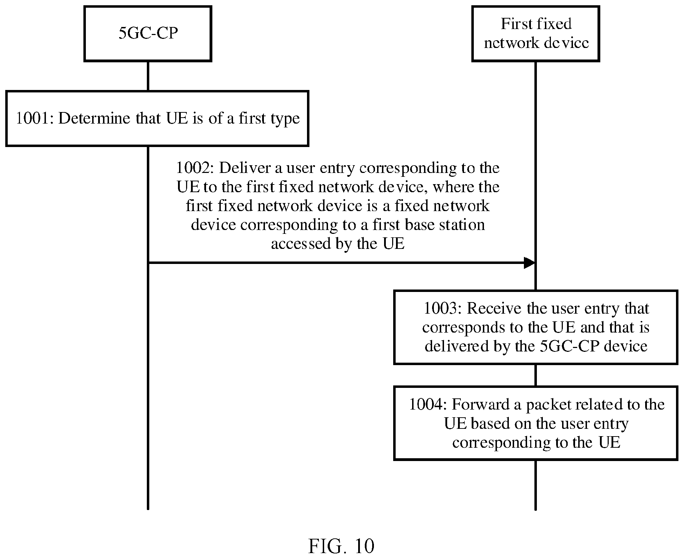

Refer to FIG. 10. The communication method provided in this embodiment of this application includes the following steps.

1001: The 5GC-CP device determines that UE is of a first type.

The UE is UE defined in 3GPP. For example, one UE may be uniquely identified by a subscriber identity module (subscriber identity module, SIM) card. The LTE includes a terminal on which a SIM card is installed, and the UE is also referred to as a subscriber (subscriber). Because the UE is uniquely identified by the SIM card, the same UE can be obtained by installing the same SIM card on different terminals. For example, the SIM card is a physical SIM card or a virtual SIM card.

For example, the UE of the first type means that the UE communicates with a destination network by using the first fixed network device. To be specific, a packet related to the UE is forwarded by the first fixed network device, so that the packet is normally transmitted between the LTE and the destination network.

Alternatively, the UE of the first type means that the UE communicates with a destination network by using the first fixed network device, the UE does not communicate with the destination network by using a 5GC-UP device, and a packet related to the LTE can be normally transmitted between the UE and the destination network without being forwarded by the 5GC-UP device. In this case, when the LTE is of the first type, because the packet related to the LTE is not forwarded by the 5GC-UP device, traffic that originally passes through the 5GC-UP device is offloaded to the first fixed network device. Therefore, the first type may also be understood as a traffic offloading type. In response to the packet related to the UE including a packet sent by the UE, the packet sent by the UE can be transmitted to the destination network without being forwarded by the 5GC-UP device. Alternatively, in response to the packet related to the UE including a packet sent to the LTE, the packet sent to the LTE can be transmitted to the LTE without being forwarded by the 5GC-UP device.

In an example embodiment, that the 5GC-CP device determines that the UE is of the first type includes: The 5GC-CP device receives an access request sent by the UE, and verifies, based on the access request, whether the UE is an authorized user. If the UE is unauthorized, the access request of the UE is rejected. If the UE is an authorized user, the 5GC-CP device further sends an authentication request to an AUSF module. After receiving the authentication request sent by the 5GC-CP device, the AUSF module determines, based on traffic package information corresponding to the UE, whether the UE is of the first type, obtains an authentication result, and returns the authentication result to the 5GC-CP device. In this way, the 5GC-CP device can receive the authentication result returned by the AUSF module, to determine, based on the authentication result, whether the UE is of the first type, and continue to perform a UE access procedure. For the LTE access procedure, refer to the following descriptions.

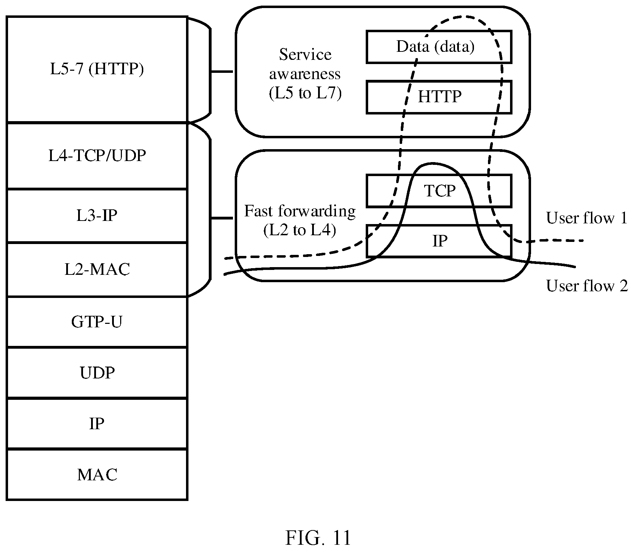

For example, determining whether the UE is of the first type based on the traffic package information corresponding to the UE includes: determining that the UE is of the first type in response to the traffic package information corresponding to the UE indicating that a packet related to the LTE does not require service aware (service aware, SA) processing. Refer to FIG. 11. FIG. 11 shows an example forwarding model. Packets located at a layer 5 (layer 5, L5) to a layer 7 (layer 7, L7) in the forwarding model require SA processing. Refer to a user flow (user flow 1) in FIG. 11. Packets located at a layer 2 (layer 2, L2) to a layer 4 (layer 4, L4) in the forwarding model do not require SA processing. Refer to a user flow 2 in FIG. 11. The user flow 2 is also referred to as fast forwarding traffic.

In a case in which the packet related to the UE requires SA processing, a device configured to forward the packet related to the UE needs to have a deep packet inspection (deep packet inspection, DPI) capability. Because the 5GC-UP device has the DPI capability, when the packet related to the UE requires SA processing, the 5GC-UP device needs to forward the packet related to the UE. When the packet related to the LTE does not require SA processing, no DPI capability is required for forwarding the packet related to the UE. Therefore, the packet related to the UE may not be forwarded by the 5GC-UP device, but may be forwarded by the first fixed network device. Therefore, the UE is of the first type.

1002: The 5GC-CP device delivers a user entry corresponding to the UE to the first fixed network device, where the first fixed network device is a fixed network device corresponding to a first base station accessed by the UE.

When the 5GC-CP device determines that the UE is of the first type, the 5GC-CP device delivers a user entry corresponding to the UE to the first fixed network device, and the first fixed network device is configured to forward the packet related to the UE based on the user entry corresponding to the UE. The user entry corresponding to the LTE is also referred to as a protocol data unit (protocol data unit, PDU) session (session) table or a user session table. The first fixed network device is a fixed network device corresponding to a first base station accessed by the UE. For example, the 5GC-CP device obtains link relationships between a plurality of base stations and a fixed network device from an SDN controller, queries, based on the first base station accessed by the UE, the link relationships between the plurality of base stations and the fixed network device, to obtain a fixed network device linked to the first base station, and determines the fixed network device linked to the first base station as the first fixed network device.

In addition to delivering the user entry corresponding to the UE to the first fixed network device, the 5GC-CP device further allocates an IP address in an address pool of the first fixed network device to the UE, and the address pool of the first fixed network device is obtained through negotiation between the 5GC-CP device and the first fixed network device. For example, if the address pool of the first fixed network device includes a private network address, after the 5GC-CP device allocates the IP address to the LTE, the IP address of the UE is the private network address.

In addition, the 5GC-CP device further delivers a tunnel to the first base station accessed by the UE. An end point of the tunnel is a node identification (identification, ID) of the first fixed network device. The node ID is used to uniquely identify the first fixed network device, so as to establish a tunnel between the first base station and the first fixed network device. Between the first base station and the first fixed network device, the packet related to the UE is transmitted through the tunnel. The tunnel is also referred to as a GPRS tunneling protocol (GPRS tunneling protocol, GTP)-U tunnel or an N3 tunnel, and the GPRS refers to a general packet radio service (general packet radio service). It should be noted that the BNG device and the BNG-UP device both support a tunnel access manner, for example, generic routing encapsulation (generic routing encapsulation, GRE) access or virtual leased line (virtual leased line, VLL) access, and the GRE access includes soft GRE. Therefore, when the first fixed network device is the BNG device or the BNG-UP device, it is feasible that the 5GC-CP device delivers the tunnel whose end point is the node ID of the first fixed network device to the first base station. In addition, each first fixed network device further corresponds to a loopback (loopback) address, where the loopback address is used for interconnection with a base station, and does not require route advertisement. Loopback addresses of different first fixed network devices may be the same or may be different, and the end point of the tunnel may also include the node ID and the loopback address of the first fixed network device.

Based on the foregoing description, when the 5GC-CP device determines that the UE is of the first type, the UE access procedure includes: The 5GC-CP device determines the first fixed network device, allocates an IP address in the address pool of the first fixed network device to the UE, establishes a tunnel between the first base station and the first fixed network device, and delivers the user entry corresponding to the UE to the first fixed network device. In this way, access of the UE is completed, and the packet related to the UE can be forwarded by the first fixed network device.

1003: The first fixed network device receives the user entry that corresponds to the UE and that is delivered by the 5GC-CP device.

Because the 5GC-CP device delivers the user entry corresponding to the UE to the first fixed network device, the first fixed network device can correspondingly receive the user entry that corresponds to the UE and that is delivered by the 5GC-CP device.

For example, when an implementation environment in which the 5GC-CP device and the first fixed network device are located does not include a BNG-CP device, the 5GC-CP device directly delivers the user entry corresponding to the UE to the first fixed network device, and the first fixed network device directly receives the user entry that corresponds to the UE and that is sent by the 5GC-CP device. Alternatively, when an implementation environment in which the 5GC-CP device and the first fixed network device are located includes a BNG-CP device, that the 5GC-CP delivers the user entry corresponding to the UE to the first fixed network device includes: The 5GC-CP device delivers the user entry corresponding to the UE to the BNG-CP device. In this way, the BNG-CP device delivers the user entry corresponding to the LTE to the first fixed network device. Correspondingly, that the first fixed network device receives the user entry that corresponds to the LTE and that is delivered by the 5GC-CP device includes: The first fixed network device receives the user entry that corresponds to the UE and that is sent by the BNG-CP device.

1004: The first fixed network device forwards the packet related to the LTE based on the user entry corresponding to the UE.

For example, that the first fixed network device forwards the packet related to the UE based on the user entry corresponding to the UE includes: In response to the packet related to the UE hitting the user entry corresponding to the UE, a primary key (key) corresponding to a hit entry is obtained, and the first fixed network device forwards the packet related to the LTE according to an indication of the primary key. Alternatively, in response to the packet related to the LTE not hitting the user entry corresponding to the UE, the packet related to the UE is dropped (dropped).

When the packet related to the UE hits the user entry corresponding to the UE, that the first fixed network device forwards the packet related to the UE includes the following two cases.

Case A1: The packet related to the UE includes a packet (uplink packet) sent by the UE, and the primary key corresponding to the hit entry is used to indicate the first fixed network device to delete a first tunnel packet header in the packet sent by the UE, and then query a routing table and an outbound interface for forwarding. To be specific, in an example embodiment, that the first fixed network device forwards the packet related to the LTE based on the user entry corresponding to the UE includes: The first fixed network device receives, through a tunnel, the packet sent by the UE, where the tunnel is located between the first base station and the first fixed network device. The first fixed network device deletes the first tunnel packet header in the packet sent by the UE, to obtain a first update packet, where the first tunnel packet header is used to transmit, through the tunnel, the packet sent by the UE from the first base station to the first fixed network device. The first fixed network device forwards the first update packet based on the user entry corresponding to the UE.

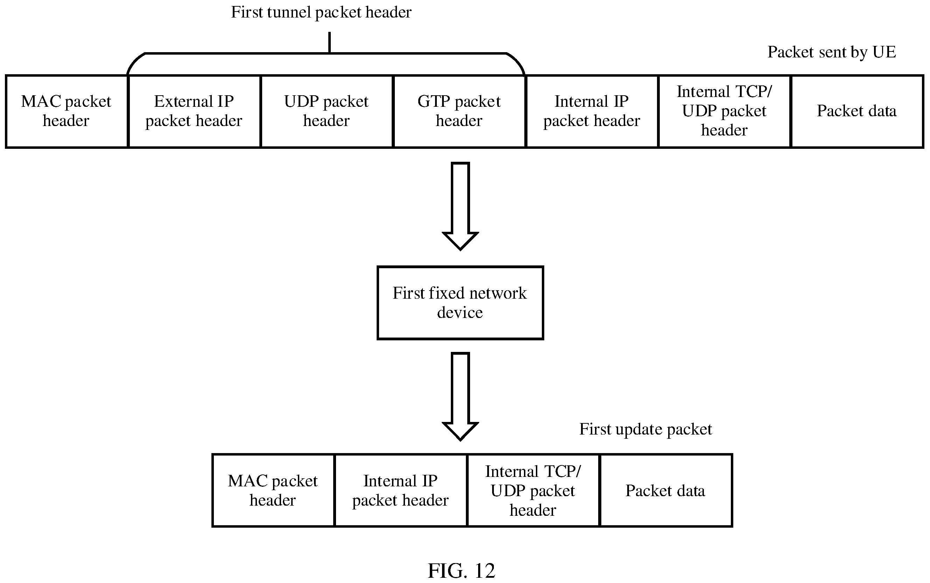

Because the tunnel is included between the first base station and the first fixed network device, after the first base station receives the packet sent by the UE, the first base station adds the first tunnel packet header to the packet, where the tunnel packet header is used to transmit the packet from the first base station to the first fixed network device through the tunnel. Therefore, the packet received by the first fixed network device includes the first tunnel packet header. Refer to FIG. 12. An upper part of FIG. 12 shows a packet structure of the packet received by the first fixed network device. The packet includes a media access control (media access control, MAC) packet header, the first tunnel packet header, an internal IP packet header, an internal Transmission Control Protocol (transmission control protocol, TCP)/User Datagram Protocol (user datagram protocol, UDP) packet header, and packet data, and the first tunnel packet header includes an external IP packet header, an external UDP packet header, and a GTP packet header.

After the first fixed network device receives the packet and the user entry corresponding to the UE is hit, the first fixed network device deletes the first tunnel packet header according to the indication of the primary key corresponding to the hit entry. A reason for deleting the first tunnel packet header is as follows: The tunnel between the first base station and the first fixed network device is no longer used in a subsequent forwarding process, and therefore, the first tunnel packet header is no longer used. After the first tunnel packet header is deleted, the first update packet can be obtained. For a packet structure of the first update packet, refer to a lower part of FIG. 12. The first update packet includes the MAC packet header, the internal IP packet header, the internal TCP/UDP packet header, and the packet data. Then, according to the indication of the primary key corresponding to the hit entry, a route and an outbound interface are queried based on a destination IP address in the internal IP packet header in the first update packet, to forward the first update packet from the found outbound interface according to the found route.

In addition, a source IP address of the internal IP packet header in the first update packet is the IP address of the UE. When the address of the UE is a private network address, the primary key corresponding to the hit entry is further used to indicate the first fixed network device to translate the source IP address from the private network address of the LTE into a public network address. If the source IP address is not translated from the private network address of the LTE into the public network address, after the packet sent by the LTE is forwarded to a destination network, a destination IP address of the packet returned by the destination network to the UE is the private network address of the UE. Consequently, the packet returned by the destination network to the LTE cannot be normally routed to the UE. Therefore, the first fixed network device needs to translate the source IP address from the private network address of the LTE into the public network address, so that the packet returned by the destination network to the UE can be normally routed to a device indicated by the public network address, and the device indicated by the public network address forwards, to the UE, the packet returned by the destination network to the UE. A process of translating the private network address into the public network address is also referred to as network address translation (network address translation, NAT). In an example embodiment, a manner of performing NAT by the first fixed network device includes but is not limited to the following two manners.

Manner 1: The first fixed network device corresponds to a first public network address, and before the first fixed network device forwards the first update packet based on the user entry corresponding to the UE, the first fixed network device translates the source IP address in the first update packet from the private network address of the UE into the first public network address.

Because the first fixed network device directly performs NAT, a subsequent packet returned by the destination network to the UE is routed to the first fixed network device, and the first fixed network device forwards, to the LTE, the packet returned by the destination network to the UE.

Manner 2: That the first fixed network device forwards the first update packet based on the user entry corresponding to the UE includes: The first fixed network device sends the first update packet to a target device based on the user entry corresponding to the UE, where the target device is configured to translate the source IP address in the first update packet from the private network address into a second public network address corresponding to a third fixed network device and forward the first update packet, and the target device includes the third fixed network device or a network address translation NAT device.

For example, the third network device is a fixed network device that has forwarded the packet sent by the UE. In other words, the UE has used the second public network address corresponding to the third network device to access the destination network. Therefore, the source IP address in the first update packet is translated from the private network address of the LTE into the second public network address, to ensure that the public network address used by the LTE to access the destination network remains unchanged. The first fixed network device forwards the first update packet to the third fixed network device, and the third fixed network device translates the source IP address in the first update packet into the second public network address corresponding to the third fixed network device. This manner is also referred to as distributed NAT. Alternatively, the first fixed network device forwards the first update packet to a NAT device dedicated for performing NAT, and the NAT device translates the source IP address in the first update packet into the second public network address corresponding to the third fixed network device. This manner is also called centralized NAT. Regardless of distributed NAT or centralized NAT, because the translated source IP address is the second public network address corresponding to the third fixed network device, subsequent packets returned by the destination network to the LTE are all routed to the third fixed network device, and the third fixed network device forwards, to the UE, the packets returned by the destination network to the UE.

Case A2: The packet related to the UE includes a packet (downlink packet) sent to the UE, and the primary key corresponding to the hit entry is used to indicate the first fixed network device to add a second tunnel packet header to the packet sent to the UE, and then query an outbound interface for forwarding. To be specific, in an example embodiment, that the first fixed network device forwards the packet related to the UE based on the user entry corresponding to the UE includes: The first fixed network device receives the packet sent to the UE. The first fixed network device adds a second tunnel packet header to the packet sent to the LTE, to obtain a second update packet, where the second tunnel packet header is used to transmit, through a tunnel, the packet sent to the UE from the first fixed network device to the first base station, and the tunnel is located between the first base station and the first fixed network device. The first fixed network device forwards the second update packet to the UE through the tunnel.

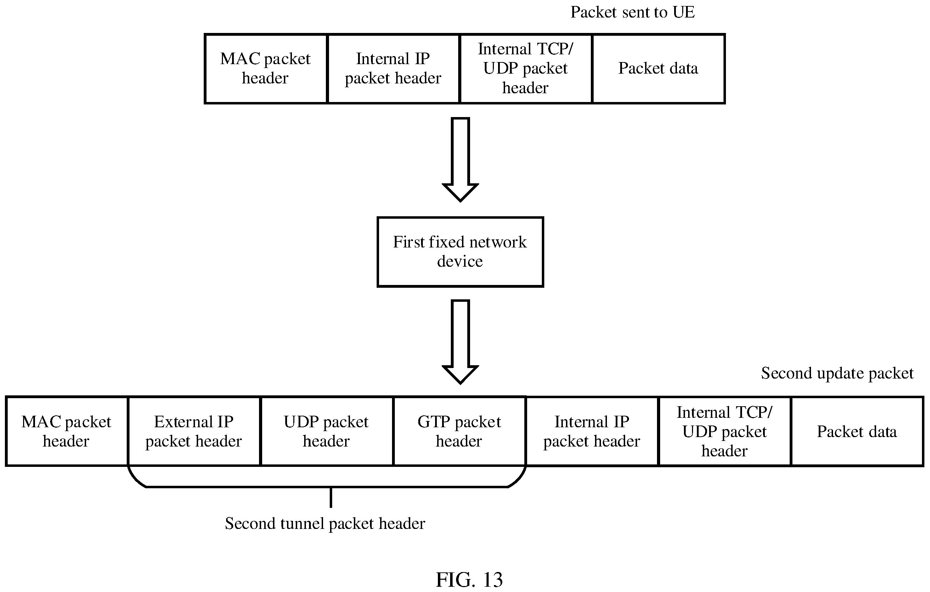

After the first fixed network device receives the packet sent to the UE, the entry corresponding to the UE is hit, and the fixed network device adds the second tunnel packet header according to an indication of the primary key corresponding to the hit entry, to transmit the packet to the first base station through the tunnel between the first base station and the first fixed network device. The second update packet is obtained after the second tunnel packet header is added. Refer to FIG. 13. An upper part of FIG. 13 shows a packet structure of the packet sent to the UE. The packet sent to the UE includes a MAC packet header, an internal IP packet header, an internal TCP/UDP packet header, and packet data. A lower part of FIG. 13 shows a packet structure of the second update packet. The second update packet includes the MAC packet header, the second tunnel packet header, the internal IP packet header, the internal TCP/UDP packet header, and the packet data, and the second tunnel packet header includes an external IP packet header, an external UDP packet header, and a GTP packet header. After the second update packet is obtained, an outbound interface is queried according to an indication of the primary key corresponding to the hit entry, to forward the second update packet from the outbound interface. It may be understood that, after the second update packet is transmitted to the first base station through the tunnel, the first base station deletes the second tunnel packet header, and then forwards the packet to the UE.

In an example embodiment, the method further includes: The 5GC-CP device sends control information to the first fixed network device. The first fixed network device receives the control information sent by the 5GC-CP device, performs traffic control on the UE based on the control information, obtains traffic statistics information of the UE, and sends the traffic statistics information to the 5GC-CP device. The 5GC-CP device receives the traffic statistics information returned by the first fixed network device based on the control information, and performs traffic management based on the traffic statistics information. For example, when the implementation environment in which the 5GC-CP device and the first fixed network device are located does not include the BNG-CP device, the 5GC-CP device and the first fixed network device directly exchange the control information and the traffic statistics information. Alternatively, when the implementation environment in which the 5GC-CP device and the first fixed network device are located includes the BNG-CP device, the control information sent by the 5GC-CP device is forwarded by the BNG-CP device to the first fixed network device, and the traffic statistics information returned by the first fixed network device is forwarded by the BNG-CP device to the 5GC-CP device.

It may be understood that the foregoing 1001 to 1004 correspond to a case in which the UE is of the first type. In an example embodiment, the method further includes: The 5GC-CP device determines that the UE is of a second type, and the 5GC-CP device delivers a user entry corresponding to the UE to the 5GC-UP device. The UE of the second type means that the UE communicates with the destination network by using the 5GC-UP device, and the packet related to the UE is forwarded by the 5GC-UP device, so that the packet is normally transmitted between the UE and the destination network. For example, in this embodiment of this application, whether the LTE is of the second type is determined based on traffic package information corresponding to the UE. In response to the traffic package information corresponding to the UE indicating that the packet related to the UE requires SA processing, that the UE is of the second type is determined.

When the 5GC-CP device determines that the UE is of the second type, the 5GC-CP device further allocates an IP address to the UE, and delivers, to the first base station accessed by the UE, a tunnel whose end point is the 5GC-UP device. In this way, the UE communicates with the destination network by using the 5GC-UP device, and the packet related to the UE is forwarded by the 5GC-UP device, so that the packet is normally transmitted between the UE and the destination network.

In a related technology, all types of LTEs in a network need to access a destination network by using a 5GC-UP device, thereby occupying a relatively large quantity of processing resources of the 5GC-UP device. However, in this embodiment of this application, the UE of the first type does not need to access the destination network by using the 5GC-UP device, and only the UE of the second type needs to access the destination network by using the 5GC-UP device. Therefore, occupied processing resources of the 5GC-UP device are reduced. In addition, different processing manners are used based on different types of the UE, so that traffic management is more flexible, and resource management of the 5GC-UP device is more accurate.

In addition, with the development of 5G technologies, LTE traffic keeps increasing. For example, the 5G technology includes a plurality of service types such as enhanced mobile broadband (enhanced mobile broadband, eMBB), massive machine type communications (massive machine type communications, mMTC), and ultra-reliable and low-latency communication (ultra reliability and low latency communication, uRLLC). In a service scenario of eMBB used as a 5G pilot, UE traffic increases significantly. Costs of the 5GC-UP device are relatively high. If all UE traffic passes through the 5GC-UP device, communication costs are increased. In this embodiment of this application, the LTE of the first type accesses the destination network by using a fixed network device, and costs of the fixed network device are less than costs of the 5GC-UP device. Therefore, communication costs can be reduced.

Because the UE may move, but a coverage area of the base station is limited, in a movement process of the LTE, a base station accessed by the LTE may be switched. Correspondingly, the fixed network device configured to forward the packet related to the UE is also handed over. For ease of description, a base station after the handover is used as a second base station, and a fixed network device corresponding to the second base station is used as a second fixed network device. In this case, the second fixed network device needs to obtain the user entry corresponding to the LTE, to forward the packet related to the UE. In an example embodiment, that the second fixed network device obtains the user entry corresponding to the LTE includes the following two cases.

Case B1: When the 5GC-CP device detects that a base station accessed by the UE is switched from the first base station to the second base station, the 5GC-CP device determines the second fixed network device corresponding to the second base station. The 5GC-CP device delivers the user entry corresponding to the UE to the second fixed network device.

The 5GC-CP device updates the end point of the tunnel to a node ID of the second fixed network device, to deliver the tunnel to the second base station, so as to establish a tunnel between the second base station and the second fixed network device.

It should be noted that, when an implementation environment in which the 5GC-CP device and the second fixed network device are located does not include the BNG-CP device, the 5GC-CP device directly delivers the user entry corresponding to the UE to the second fixed network device, and the second fixed network device directly receives the user entry that corresponds to the UE and that is sent by the 5GC-CP device. Alternatively, when an implementation environment in which the 5GC-CP device and the second fixed network device are located includes the BNG-CP device, the 5GC-CP delivers the user entry corresponding to the UE to the BNG-CP device, so that the BNG-CP device delivers the user entry corresponding to the UE to the second fixed network device. Because the BNG-CP device has previously delivered the user entry corresponding to the UE to the first fixed network device, the BNG-CP device can deliver the user entry corresponding to the LTE to the second fixed network device only by performing refreshing on the basis of the previously delivered user entry corresponding to the UE. Correspondingly, the second fixed network device receives the user entry that corresponds to the UE and that is sent by the BNG-CP device.

Case B2: The method further includes: The 5GC-CP device receives a user entry obtaining request sent by the second fixed network device, where the second fixed network device is a fixed network device corresponding to the second base station to which the UE is handed over from the accessed first base station. The 5GC-CP device sends, based on the user entry obtaining request, the user entry corresponding to the UE to the second fixed network device.

The 5GC-CP device establishes a tunnel between the second base station and the second fixed network device. For a process of establishing the tunnel, refer to the description in the case B1. Details are not described herein again. Then, the second fixed network device can receive, through the tunnel, a packet forwarded by the second base station. Because the second fixed network device has not obtained the user entry corresponding to the LTE, the packet cannot hit a user entry currently owned by the second fixed network device. Therefore, the second fixed network device sends the user entry obtaining request to the 5GC-CP device. For example, the user entry obtaining request includes a tunnel packet header and an internal IP packet header, and the tunnel packet header is used for tunnel transmission of a packet between the second base station and the second fixed network device.

When the implementation environment in which the 5GC-CP device and the second fixed network device are located does not include the BNG-CP device, the second fixed network device directly sends the user entry obtaining request to the 5GC-CP device. The 5GC-CP device receives the user entry obtaining request, authenticates the LTE based on the user entry obtaining request, and returns the user entry corresponding to the UE to the second fixed network device after the authentication succeeds. Alternatively, when the implementation environment in which the 5GC-CP device and the second fixed network device are located includes the BNG-CP device, the 5GC-CP delivers the user entry corresponding to the LTE to the BNG-CP device, and the second fixed network device sends the user entry obtaining request to the BNG-CP device. The BNG-CP device queries a local user entry of the BNG-CP device based on the user entry obtaining request, authenticates the UE, and returns the user entry corresponding to the UE to the second fixed network device after the authentication succeeds.

The following describes the communication method provided in embodiments of this application in different implementation environments.

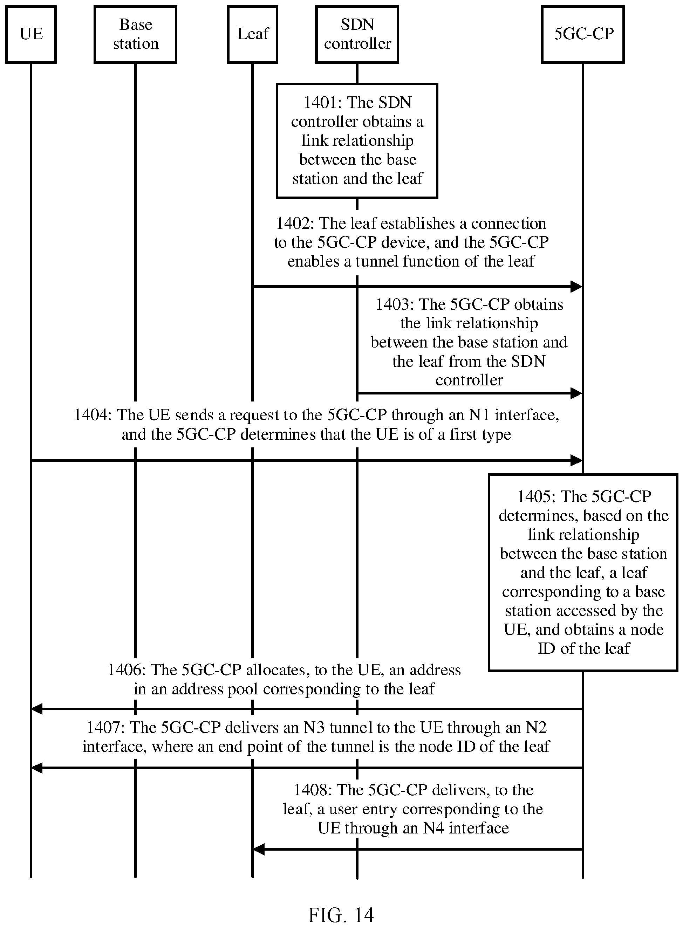

Implementation environment 1: Refer to FIG. 1 and FIG. 14. In the implementation environment 1, the communication method includes the following steps.

1401: The SDN controller obtains a link relationship between the base station and the leaf. For example, the SDN controller obtains the link relationship between the base station and the leaf from an Internet technology (Internet technology, IT) system such as a network management system of an operator or an asset management system.

1402: The leaf establishes a connection to the 5GC-CP through the N4 interface, and the 5GC-CP enables a tunnel function of the leaf.

1403: The 5GC-CP obtains the link relationship between the base station and the leaf from the SDN controller.

1404: The UE sends a request to the 5GC-CP through the N1 interface, and the 5GC-CP determines that the UE is of the first type.

1405: The 5GC-CP determines, based on the link relationship between the base station and the leaf, a leaf corresponding to the base station accessed by the LTE, and obtains a node ID of the leaf.

1406: The 5GC-CP allocates, to the LTE, an address of an address pool corresponding to the leaf.

1407: The 5GC-CP delivers a tunnel to the UE through the N2 interface, where an end point of the tunnel is the node ID of the leaf, and the tunnel is an N3 tunnel located between the base station and the leaf. Refer to FIG. 2. 1402 to 1407 are performed by the AMF module in the 5 GC-CP.

1408: The 5GC-CP delivers, to the leaf, the user entry corresponding to the LTE through the N4 interface, where the leaf is configured to forward the packet related to the UE based on the user entry corresponding to the UE. Refer to FIG. 2. 1408 is performed by the SMF module in the 5 GC-CP.

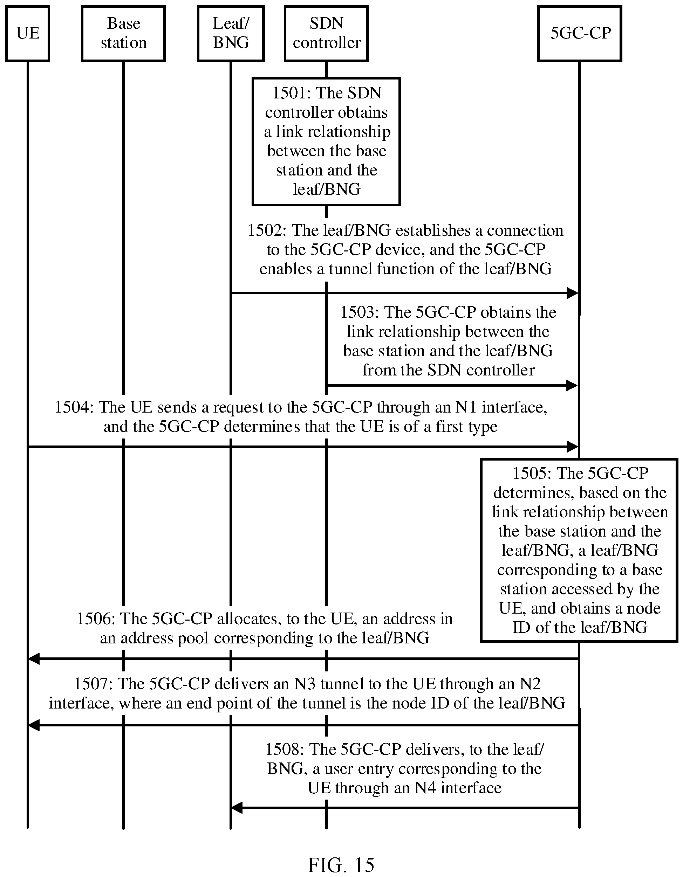

Implementation environment 2: Refer to FIG. 3 and FIG. 15. In the implementation environment 2, the communication method includes the following steps.

1501: The SDN controller obtains a link relationship between the base station and the leaf/BNG.

1502: The leaf/BNG establishes a connection to the 5GC-CP through the N4 interface, and the 5GC-CP enables a tunnel function of the leaf/BNG.

1503: The 5GC-CP obtains the link relationship between the base station and the leaf/BNG from the SDN controller.

1504: The UE sends a request to the 5GC-CP through the N1 interface, and the 5GC-CP determines that the UE is of the first type.

1505: The 5GC-CP determines, based on the link relationship between the base station and the leaf/BNG, a leaf/BNG corresponding to the base station accessed by the LTE, and obtains a node ID of the leaf/BNG.

1506: The 5GC-CP allocates, to the LTE, an address of an address pool corresponding to the leaf/BNG.

1507: The 5GC-CP delivers a tunnel to the UE through the N2 interface, where an end point of the tunnel is the node ID of the leaf/BNG, and the tunnel is an N3 tunnel located between the base station and the leaf/BNG. Refer to FIG. 2. 1502 to 1507 are performed by the AMF module in the 5GC-CP.

1508: The 5GC-CP delivers the user entry corresponding to the UE to the leaf/BNG through the N4 interface, where the leaf/BNG is configured to forward the packet related to the UE based on the user entry corresponding to the UE. Refer to FIG. 2. 1508 is performed by the SMF module in the 5GC-CP.

In the foregoing 1501 to 1508, an example in which the first fixed network device includes the leaf/BNG, that is, the leaf is also used as a BNG is used to describe the communication method provided in embodiments of this application. In FIG. 3, the leaf/BNG may not be used, but an independent BNG may be used as the first fixed network device. For steps that need to be performed by the BNG, refer to steps that need to be performed by the leaf/BNG in 1501 to 1508. Details are not described herein again.

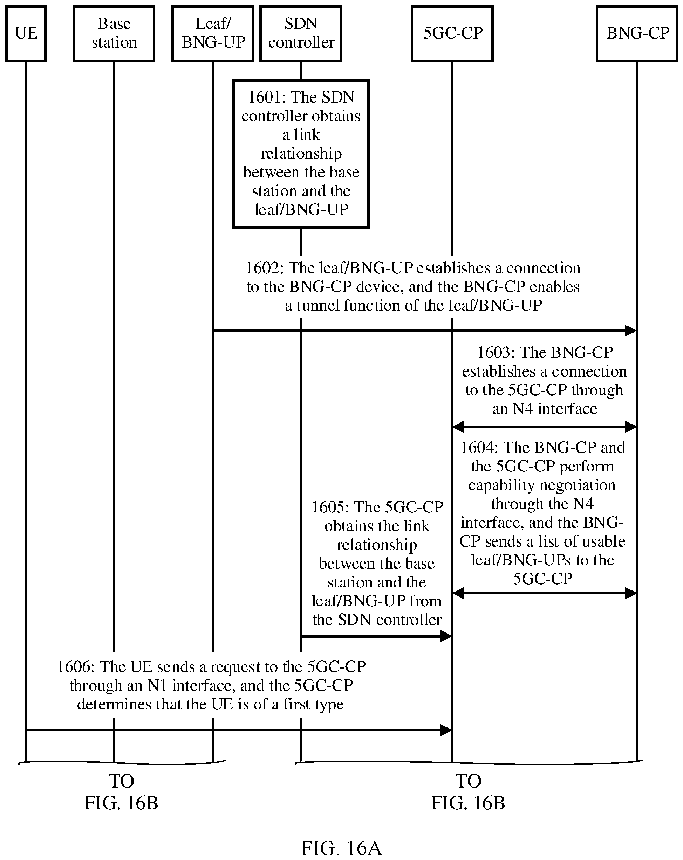

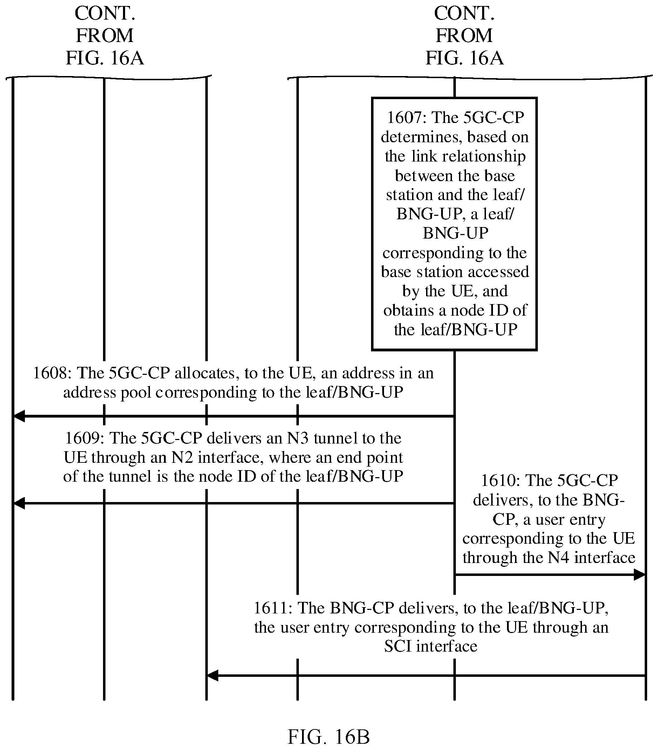

Implementation environment 3: Refer to FIG. 5, FIG. 16A, and FIG. 16B. In the implementation environment 3, the communication method includes the following steps.

1601: The SDN controller obtains a link relationship between the base station and the leaf/BNG-UP.

1602: The leaf/BNG-UP establishes a connection to the BNG-CP device, and the BNG-CP enables a tunnel function of the leaf/BNG-UP.

1603: The BNG-CP establishes a connection to the 5GC-CP through the N4 interface.

1604: The BNG-CP and the 5GC-CP perform capability negotiation through the N4 interface, and the BNG-CP sends a list of usable leaf/BNG-UPs to the 5GC-CP.

1605: The 5GC-CP obtains the link relationship between the base station and the leaf/BNG-UP from the SDN controller.

1606: The UE sends a request to the 5GC-CP through the N1 interface, and the 5GC-CP determines that the UE is of the first type.

1607: The 5GC-CP determines, based on the link relationship between the base station and the leaf/BNG-UP, a leaf/BNG-UP corresponding to the base station accessed by the UE, and obtains a node ID of the leaf/BNG-UP.

1608: The 5GC-CP allocates, to the LTE, an address of an address pool corresponding to the leaf/BNG-UP.

1609: The 5GC-CP delivers a tunnel to the UE through the N2 interface, where an end point of the tunnel is the node ID of the leaf/BNG-UP, and the tunnel is an N3 tunnel located between the base station and the leaf/BNG-UP. Refer to FIG. 2. 1605 to 1609 are performed by the AMF module in the 5GC-CP.

1610: The 5GC-CP delivers, to the BNG-CP, the user entry corresponding to the UE through the N4 interface. Refer to FIG. 2. 610 is performed by the SMF module in the 5GC-CP.

1611: The BNG-CP delivers, to the leaf/BNG-UP, the user entry corresponding to the UE through an SCI interface, where the leaf/BNG-UP is configured to forward the packet related to the LTE based on the user entry corresponding to the UE. The SCI interface includes a Control Plane and User Plane Separation Protocol (control plane and user plane separation protocol, CUSP) interface or a PFCP-extended interface.

In the foregoing 1601 to 1611, an example in which the first fixed network device includes the leaf/ BNG-UP, that is, the leaf is also used as a BNG-UP is used to describe the communication method provided in embodiments of this application. In FIG. 5, the leaf/BNG-UP may not be used, but an independent BNG-UP may be used as the first fixed network device. For steps that need to be performed by the BNG-UP, refer to steps that need to be performed by the leaf/BNG-UP in 1601 to 1611. Details are not described herein again.

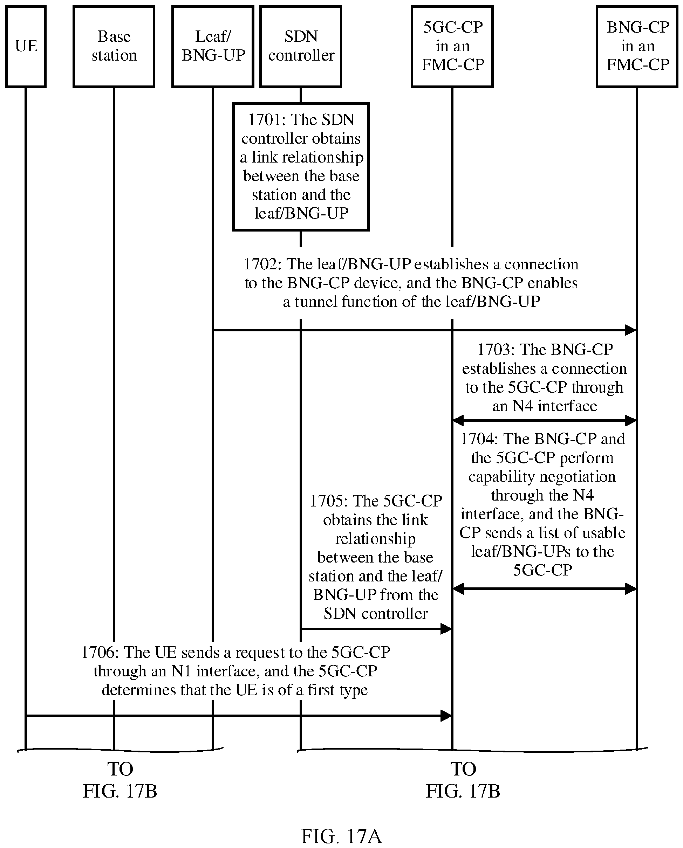

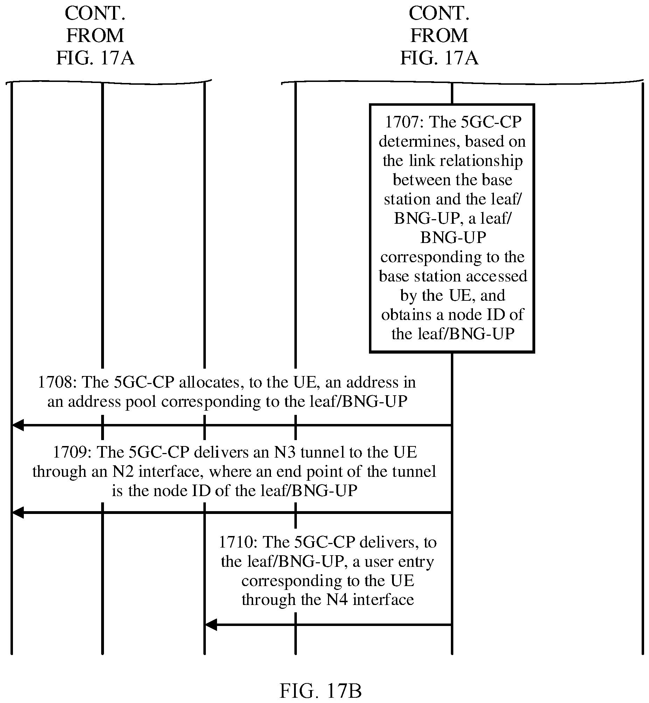

Implementation environment 4: Refer to FIG. 7, FIG. 17A, and FIG. 17B. In the implementation environment 4, the communication method includes the following steps.

1701: The SDN controller obtains a link relationship between the base station and the leaf/BNG-UP.

1702: The leaf/BNG-UP establishes a connection to the BNG-CP device, and the BNG-CP enables a tunnel function of the leaf/BNG-UP.

1703: The BNG-CP establishes a connection to the 5GC-CP in the FMC-CP through the N4 interface.

1704: The BNG-CP and the 5GC-CP in the FMC-CP perform capability negotiation through the N4 interface, and the BNG-CP sends a list of usable leaf/BNG-UPs to the 5GC-CP in the FMC-CP.

1705: The 5GC-CP in the FMC-CP obtains the link relationship between the base station and the leaf/BNG-UP from the SDN controller.

1706: The UE sends a request to the 5GC-CP in the FMC-CP through the N1 interface, and the 5GC-CP in the FMC-CP determines that the UE is of the first type.

1707: The 5GC-CP in the FMC-CP determines, based on the link relationship between the base station and the leaf/BNG-UP, a leaf/BNG-UP corresponding to the base station accessed by the UE, and obtains a node ID of the leaf/BNG-UP. Refer to FIG. 2. 1705 to 1707 are performed by the AMF module in the 5GC-CP.

1708: The 5GC-CP in the FMC-CP allocates, to the UE, an address of an address pool corresponding to the leaf/BNG-UP. For example, refer to FIG. 2. 1708 is performed by the AMF module in the 5GC-CP. Refer to FIG. 8 and FIG. 9. Alternatively, 1708 is performed by the DAPF module in the FMC-CP. The DAPF module supports a local address pool and a remote address pool that is obtained by communicating with the DHCP server. In addition to allocating the address to the UE, the DAPF module can further allocate a public network address in a NAT scenario. In addition, the DAPF module supports dynamic address allocation. That is, after an address is allocated, the address is reclaimed based on an actual requirement. The DAPF module further indicates binding between the address pool and the leaf/BNG-UP or the BNG-UP.

1709: The 5GC-CP in the FMC-CP delivers a tunnel to the UE through the N2 interface, where an end point of the tunnel is the node ID of the leaf/BNG-UP, and the tunnel is an N3 tunnel located between the base station and the leaf/BNG-UP.

1710: The 5GC-CP in the FMC-CP delivers, to the leaf/BNG-UP, the user entry corresponding to the UE through the N4 interface. For example, in the architecture 1 of the FMC-CP shown in FIG. 8, the SMF module in the 5GC-CP delivers the user entry corresponding to the UE to the ASMF module, and the ASMF module delivers the user entry corresponding to the UE to the leaf/BNG-UP. Alternatively, in the architecture 2 of the FMC-CP shown in FIG. 9, the SMF module in the 5GC-CP directly delivers the user entry corresponding to the UE to the leaf/BNG-UP.

In the foregoing 1701 to 1710, an example in which the first fixed network device includes the leaf/ BNG-UP, that is, the leaf is also used as a BNG-UP is used to describe the communication method provided in embodiments of this application. In FIG. 7, the leaf/BNG-UP may not be used, but an independent BNG-UP may be used as the first fixed network device. For steps that need to be performed by the BNG-UP, refer to steps that need to be performed by the leaf/BNG-UP in 1701 to 1710. Details are not described herein again.

In conclusion, in embodiments of this application, when the UE is of the first type, the 5GC-CP device delivers the user entry corresponding to the LTE to the fixed network device, so that the fixed network device can be used to forward the packet related to the UE. Therefore, processing resources occupied by the 5GC-UP device are reduced.

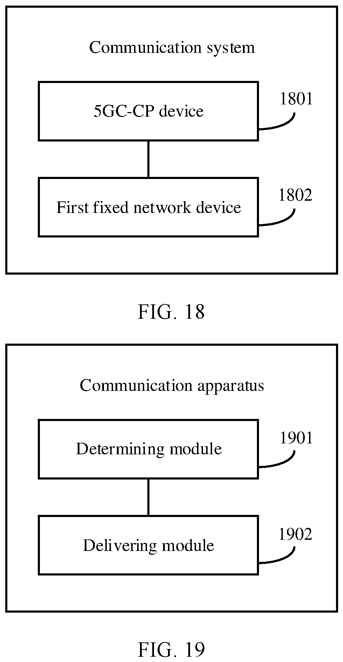

The foregoing describes the communication method provided in embodiments of this application. Corresponding to the foregoing method, embodiments of this application further provide a communication system. As shown in FIG. 18, the system includes a 5GC-CP device 1801 and a first fixed network device 1802. The 5GC-CP device 1801 is configured to: determine that UE is of a first type, and deliver a user entry corresponding to the LTE to the first fixed network device 1802, where the first fixed network device 1802 is a fixed network device corresponding to a first base station accessed by the UE. The first fixed network device 1802 is configured to forward a packet related to the UE based on the user entry corresponding to the UE.

In a possible implementation, the 5GC-CP device 1801 is further configured to: determine that the UE is of a second type, and deliver a user entry corresponding to the UE to the 5GC-UP device. The 5GC-UP device is configured to forward a packet related to the LTE based on the user entry corresponding to the UE.

In a possible implementation, the 5GC-CP device 1801 is further configured to: when detecting that a base station accessed by the UE is switched from the first base station to the second base station, determine a second fixed network device corresponding to the second base station, and deliver the user entry corresponding to the LTE to the second fixed network device. The second fixed network device is configured to forward the packet related to the UE based on the user entry corresponding to the UE.

In a possible implementation, the 5GC-CP device 1801 is configured to: receive a user entry obtaining request sent by the second fixed network device, and send, based on the user entry obtaining request, the user entry corresponding to the UE to the second fixed network device, where the second fixed network device is a fixed network device corresponding to the second base station to which the UE is handed over from the accessed first base station. The second fixed network device is configured to forward the packet related to the UE based on the user entry corresponding to the UE.

In a possible implementation, the packet related to the UE includes a packet sent by the UE, and the first fixed network device 1802 is configured to receive, through a tunnel, the packet sent by the UE, where the tunnel is located between the first base station and the first fixed network device 1802. The first fixed network device 1802 is configured to delete a first tunnel packet header in the packet sent by the UE, to obtain a first update packet, where the first tunnel packet header is used to transmit, through the tunnel, the packet sent by the UE from the first base station to the first fixed network device 1802. The first fixed network device 1802 is configured to forward the first update packet based on the user entry corresponding to the UE.

In a possible implementation, the first fixed network device 1802 corresponds to a first public network address, the UE corresponds to a private network address allocated by the 5GC-CP device 1801, and the first fixed network device 1802 is further configured to translate a source Internet protocol IP address in the first update packet from the private network address into the first public network address.

In a possible implementation, the UE corresponds to a private network address allocated by the 5GC-CP device 1801, the first fixed network device 1802 is configured to send the first update packet to a target device based on the user entry corresponding to the UE, and the target device includes a third fixed network device or a NAT device. The target device is configured to: receive the first update packet, translate a source Internet protocol IP address in the first update packet from the private network address into a second public network address corresponding to the third fixed network device, and forward the first update packet, where the third fixed network device is a fixed network device that has forwarded the packet sent by the UE.

In a possible implementation, the packet related to the UE includes a packet sent to the UE, and the first fixed network device 1802 is configured to receive the packet sent to the UE. The first fixed network device 1802 is configured to add a second tunnel packet header to the packet sent to the LTE, to obtain a second update packet, where the second tunnel packet header is used to transmit, through a tunnel, the packet sent to the LTE from the first fixed network device 1802 to the first base station, and the tunnel is located between the first base station and the first fixed network device 1802. The first fixed network device 1802 is configured to forward the second update packet to the UE through the tunnel.

In a possible implementation, the first fixed network device 1802 is configured to receive control information sent by the 5GC-CP device 1801, perform traffic control on the UE based on the control information, obtain traffic statistics information of the UE, and send the traffic statistics information to the 5GC-CP device 1801. The 5GC-CP device 1801 is configured to perform traffic management based on the traffic statistics information.

In a possible implementation, the first fixed network device 1802 includes a BNG device or a metropolitan area network edge device.

In a possible implementation, the first fixed network device 1802 includes a BNG-UP device, and the 5GC-CP device 1801 is configured to deliver the user entry corresponding to the UE to the BNG-CP device. The BNG-CP is configured to deliver the user entry corresponding to the UE to a BNG-UP device.

The foregoing describes the communication method in embodiments of this application. Corresponding to the foregoing method, an embodiment of this application further provides an example communication apparatus. The apparatus is configured to perform, by using the modules shown in FIG. 19, the communication methods performed by the 5GC-CP device in FIG. 10 and FIG. 14 to 17. As shown in FIG. 19, the communication apparatus provided in this application includes the following modules:
a determining module 1901, configured to determine, by a 5GC-CP device, that UE is of a first type; and
a delivering module 1902, configured to: deliver, by the 5GC-CP device, a user entry corresponding to the UE to a first fixed network device, where the first fixed network device is a fixed network device corresponding to a first base station accessed by the UE.

In a possible implementation, the determining module 1901 is further configured to: when the 5GC-CP device detects that a base station accessed by the UE is switched from the first base station to a second base station, determine, by the 5GC-CP device, a second fixed network device corresponding to the second base station.

The delivering module 1902 is further configured to: deliver, by the 5GC-CP device to the second fixed network device, the user entry corresponding to the UE.

In a possible implementation, the apparatus further includes:
a receiving module, configured to: receive, by the 5GC-CP device, a user entry obtaining request sent by the second fixed network device, where the second fixed network device is a fixed network device corresponding to the second base station to which the UE is handed over from the accessed first base station; and
the delivering module 1902 is further configured to: send, by the 5GC-CP device based on the user entry obtaining request, the user entry corresponding to the UE to the second fixed network device.

In a possible implementation, the delivering module 1902 is further configured to: send, by the 5GC-CP device, control information to the first fixed network device; and receive, by the 5GC-CP device, traffic statistics information returned by the first fixed network device based on the control information, and perform traffic management based on the traffic statistics information.

In a possible implementation, the first fixed network device includes a BNG device or a metropolitan area network edge device.

In a possible implementation, the first fixed network device includes a BNG-UP device. The delivering module 1902 is configured to: deliver, by the 5GC-CP device, the user entry corresponding to the UE to a BNG-CP device, and send, by using the BNG-CP device, the user entry corresponding to the UE to the BNG-UP device.

In a possible implementation, the determining module 1901 is further configured to determine, by the 5GC-CP device, that the UE is of a second type.

The delivering module 1902 is further configured to: deliver, by the 5GC-CP device to a 5GC-UP device, the user entry corresponding to the UE.

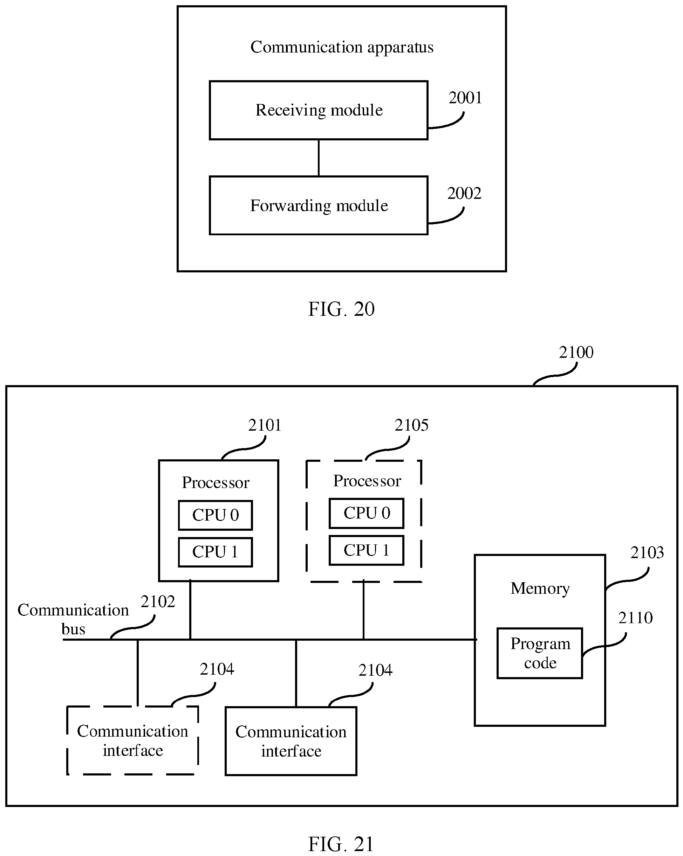

Corresponding to the foregoing method, an embodiment of this application further provides an example communication apparatus. The apparatus is configured to perform, by using the modules shown in FIG. 20, the communication methods performed by the first fixed network device in FIG. 10 and FIG. 14 to 17. As shown in FIG. 20, the communication apparatus provided in this application includes the following modules:
a receiving module 2001, configured to: receive, by a first fixed network device, a user entry that corresponds to UE and that is delivered by a 5GC-CP device, where the first fixed network device is a fixed network device corresponding to a first base station accessed by the UE, and the UE is of a first type; and
a forwarding module 2002, configured to: forward, by the first fixed network device, a packet related to the UE based on the user entry corresponding to the UE.

In a possible implementation, the packet related to the UE includes a packet sent by the UE, and forwarding module 2002 is configured to: receive, by the first fixed network device through a tunnel, the packet sent by the UE, where the tunnel is located between the first base station and the first fixed network device; delete, by the first fixed network device, a first tunnel packet header in the packet sent by the UE, to obtain a first update packet, where the first tunnel packet header is used to transmit, through the tunnel, the packet sent by the UE from the first base station to the first fixed network device; and forward, by the first fixed network device, the first update packet based on the user entry corresponding to the UE.

In a possible implementation, the first fixed network device corresponds to the first public network address, the UE corresponds to a private network address allocated by the 5GC-CP device, and the forwarding module 2002 is further configured to: translate, by the first fixed network device, a source Internet protocol IP address in the first update packet from the private network address into the first public network address.

In a possible implementation, the UE corresponds to a private network address allocated by the 5GC-CP device, and the forwarding module 2002 is configured to: send, by the first fixed network device, the first update packet to a target device based on the user entry corresponding to the UE, where the target device is configured to translate a source IP address in the first update packet from the private network address into a second public network address corresponding to a third fixed network device and then forward the first update packet, and the target device includes the third fixed network device or a NAT device.

In a possible implementation, the packet related to the UE includes a packet sent to the UE, and the forwarding module 2002 is configured to: receive, by the first fixed network device, the packet sent to the LTE; add, by the first fixed network device, a second tunnel packet header to the packet sent to the UE, to obtain a second update packet, where the second tunnel packet header is used to transmit, through a tunnel, the packet sent to the UE from the first fixed network device to the first base station, and the tunnel is located between the first base station and the first fixed network device; and forward, by the first fixed network device, the second update packet to the UE through the tunnel.

In a possible implementation, the receiving module 2001 is further configured to: receive, by the first fixed network device, control information sent by the 5GC-CP device, perform traffic control on the LTE based on the control information, obtain traffic statistics information of the UE, and send the traffic statistics information to the 5GC-CP device, where the traffic statistics information is used by the 5GC-CP device to perform traffic management.

In a possible implementation, the first fixed network device includes a BNG device or a metropolitan area network edge device.

In a possible implementation, the first fixed network device includes a BNG-UP device, and the receiving module 2001 is configured to: receive, by the BNG-UP device, the user entry that corresponds to the UE and that is delivered by a BNG-CP device.

It should be understood that, when the apparatus provided in FIG. 19 or 20 implements functions of the apparatus, division into the foregoing functional modules is merely used as an example for description. During actual application, the foregoing functions may be allocated to different functional modules for implementation based on a requirement. In other words, a device is divided into different functional modules in terms of an inner structure, to implement all or some of the functions described above. In addition, the apparatuses provided in the foregoing embodiment and the method embodiments pertain to the same concept. For a specific implementation process of the apparatus, refer to the method embodiments. Details are not described herein again.

In an example embodiment, an embodiment of this application provides a communication device. The device includes a memory and a processor. The memory stores at least one instruction, and the processor loads and executes the at least one instruction, so that the device implements the communication methods performed by the 5GC-CP in FIG. 10 and FIG. 14 to 17.

In an example embodiment, an embodiment of this application provides a communication device. The device includes a memory and a processor. The memory stores at least one instruction, and the processor loads and executes the at least one instruction, so that the device implements the communication methods performed by the first fixed network device in FIG. 10 and FIG. 14 to 17.

Refer to FIG. 21. FIG. 21 is a schematic diagram of a structure of an example of a communication device 2100 according to this application. The communication device 2100 includes at least one processor 2101, a memory 2103, and at least one communication interface 2104.

The processor 2101 is, for example, a general-purpose CPU, a digital signal processor (digital signal processor, DSP), a network processor (network processor, NP), a GPU, a neural-network processor (neural-network processing unit, NPU), a data processing unit (data processing unit, DPU), a microprocessor, or one or more integrated circuits or application-specific integrated circuits (application-specific integrated circuits, ASIC), a programmable logic device (programmable logic device, PLD), or another programmable logic device, a transistor logic device, a hardware component, or any combination thereof that are configured to implement the solutions in this application. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to content disclosed in this application. Alternatively, the processor may be a combination of processors implementing a computing function, for example, including a combination of one or more microprocessors, or a combination of a DSP and a microprocessor.

Optionally, the communication device 2100 further includes a bus 2102. The bus 2102 is configured to transmit information between components of the communication device 2100. The bus 2102 may be a peripheral component interconnect (peripheral component interconnect, PCI for short) bus, an extended industry standard architecture (extended industry standard architecture, EISA for short) bus, or the like. The bus 2102 may be classified into an address bus, a data bus, a control bus, and the like. For ease of representation, only one bold line is used for representation in FIG. 21, but this does not mean that there is only one bus or only one type of bus.

For example, the memory 2103 is a read-only memory (read-only memory, ROM) or another type of storage device capable of storing static information and instructions, or a random access memory (random access memory, RAM) or another type of dynamic storage device capable of storing information and instructions, or is an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Bluray disc, and the like), a magnetic disk storage medium or another magnetic storage device, or any other medium capable of carrying or storing expected program code in an instruction form or a data structure form and capable of being accessed by a computer. However, the memory is not limited thereto. For example, the memory 2103 may exist independently, and is connected to the processor 2101 through the bus 2102. The memory 2103 may be integrated with the processor 2101.

The communication interface 2104 is configured to communicate with another device or a communication network by using any transceiver-type apparatus. The communication network may be an Ethernet, a radio access network (radio access network, RAN), a wireless local area network (wireless local area network, WLAN), or the like. The communication interface 2104 may include a wired communication interface, and may further include a wireless communication interface. Specifically, the communication interface 2104 may be an Ethernet (Ethernet) interface, such as a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network communication interface, or a combination thereof. The Ethernet interface may be an optical interface, an electrical interface, or a combination thereof. In some implementations of this application, the communication interface 2104 may be used by the communication device 2100 to communicate with another device.

During specific implementation, as some implementations, the processor 2101 may include one or more CPUs, for example, a CPU 0 and a CPU 1 shown in FIG. 21. Each of the processors may be a single-core processor, or may be a multi-core processor. The processor herein may be one or more devices, circuits, and/or processing cores configured to process data (for example, computer program instructions).

During specific implementation, as some implementations, the communication device 2100 may include a plurality of processors, for example, the processor 2101 and a processor 2105 in FIG. 21. Each of the processors may be a single-core processor, or may be a multi-core processor. The processor herein may be one or more devices, circuits, and/or processing cores configured to process data (for example, computer program instructions).

In some implementations, the memory 2103 is configured to store program code 2110 for executing the solutions of this application, and the processor 2101 may execute the program code 2110 stored in the memory 2103. In other words, the communication device 2100 may implement, by using the processor 2101 and the program code 2110 in the memory 2103, the communication method provided in the method embodiments. The program code 2110 may include one or more software modules. Optionally, the processor 2101 may store program code or instructions for performing the solutions of this application.

In a specific implementation process, the communication device 2100 in this application may correspond to the 5GC-CP device or the first fixed network device configured to perform the foregoing method. The processor 2101 in the communication device 2100 reads instructions in the memory 2103, so that the communication device 2100 shown in FIG. 21 can perform all or some of the steps in the method embodiments.

The communication device 2100 may further correspond to the apparatus shown in FIG. 19 or FIG. 20, and each functional module in the apparatus shown in FIG. 19 or FIG. 20 is implemented by using software of the communication device 2100. In other words, the functional modules included in the apparatus shown in FIG. 19 or FIG. 20 are generated after the processor 2101 of the communication device 2100 reads the program code 2110 stored in the memory 2103.

The steps of the communication methods shown in FIG. 10 and FIG. 14 to 17 are completed by using a hardware integrated logical circuit in the processor of the communication device 2100 or by using instructions in a form of software. The steps of the method disclosed with reference to the method embodiments disclosed in this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and performs the steps in the foregoing method embodiments in combination with the hardware in the processor. To avoid repetition, details are not described herein again.

It should be understood that the processor may be a central processing unit (central processing unit, CPU), or may be another general-purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In an example embodiment, an embodiment of this application provides a communication system. The system includes a communication device configured to perform the methods performed by the 5GC-CP device in FIG. 10 and FIG. 14 to 17, and a communication device configured to indicate the methods performed by the first fixed network device in FIG. 10 and FIG. 14 to 17.

In an example embodiment, an embodiment of this application provides a computer-readable storage medium, the computer-readable storage medium stores a program or instructions, and when the program or the instructions are run on a computer, the methods performed by the 5GC-CP device in FIG. 10 and FIG. 14 to 17 are performed.

In an example embodiment, an embodiment of this application provides a computer-readable storage medium, the computer-readable storage medium stores a program or instructions, and when the program or the instructions are run on a computer, the methods performed by the first fixed network device in FIG. 10 and FIG. 14 to 17 are performed.

In an example embodiment, an embodiment of this application provides a computer program (product). The computer program (product) includes computer program code. When the computer program code is run by a computer, the computer is enabled to perform the communication method in any one of the foregoing example embodiments.

In an example embodiment, an embodiment of this application provides a chip, including a processor, and the processor is configured to invoke, from a memory, and run instructions stored in the memory, so that a communication device in which the chip is installed performs the communication method provided in any one of the foregoing example embodiments.

In an example embodiment, an embodiment of this application provides another chip, including an input interface, an output interface, a processor, and a memory. The input interface, the output interface, the processor, and the memory are connected through an internal connection path. The processor is configured to execute code in the memory. When the code is executed, the processor is configured to perform the communication method provided in any one of the foregoing example embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk)), or the like.

The foregoing descriptions are merely embodiments of this application, but are not intended to limit this application. Any modification, equivalent replacement, or improvement made without departing from the spirit and principle of this application shall fall within the protection scope of this application.

## Claims

1. A communication method, wherein the method comprises:
determining, by a 5th generation mobile communication technology core 5GC-control plane CP device, that user equipment UE is of a first type; and
delivering, by the 5GC-CP device, a user entry corresponding to the UE to a first fixed network device, wherein the first fixed network device is a fixed network device corresponding to a first base station accessed by the UE.

2. The method according to claim 1, wherein the method further comprises:
when the 5GC-CP device detects that a base station accessed by the UE is switched from the first base station to a second base station, determining, by the 5GC-CP device, a second fixed network device corresponding to the second base station; and
delivering, by the 5GC-CP device to the second fixed network device, the user entry corresponding to the UE.

3. The method according to claim 1, wherein the method further comprises:
receiving, by the 5GC-CP device, a user entry obtaining request sent by a second fixed network device, wherein the second fixed network device is a fixed network device corresponding to a second base station to which the LTE is handed over from the accessed first base station; and
sending, by the 5GC-CP device based on the user entry obtaining request, the user entry corresponding to the UE to the second fixed network device.

4. The method according to any one of claims 1 to 3, wherein the method further comprises:
sending, by the 5GC-CP device, control information to the first fixed network device; and
receiving, by the 5GC-CP device, traffic statistics information returned by the first fixed network device based on the control information, and performing traffic management based on the traffic statistics information.

5. The method according to any one of claims 1 to 4, wherein the first fixed network device comprises a broadband network gateway BNG device or a metropolitan area network edge device.

6. The method according to claim 5, wherein the first fixed network device comprises a broadband network gateway user plane BNG-UP device, and the delivering, by the 5GC-CP device, a user entry corresponding to the UE to a first fixed network device comprises:
delivering, by the 5GC-CP device to a BNG-CP device, the user entry corresponding to the UE, and sending, by using the BNG-CP device, the user entry corresponding to the UE to the BNG-UP device.

7. The method according to claim 1, wherein the method further comprises:
determining, by the 5GC-CP device, that the UE is of a second type; and
delivering, by the 5GC-CP device to a 5GC-user plane UP device, the user entry corresponding to the UE.

8. A communication method, wherein the method comprises:
receiving, by a first fixed network device, a user entry that corresponds to user equipment UE and that is delivered by a 5th generation mobile communication technology core 5GC-control plane CP device, wherein the first fixed network device is a fixed network device corresponding to a first base station accessed by the UE, and the UE is of a first type; and
forwarding, by the first fixed network device, a packet related to the UE based on the user entry corresponding to the UE.

9. The method according to claim 8, wherein the packet related to the UE comprises a packet sent by the UE, and the forwarding, by the first fixed network device, a packet related to the UE based on the user entry corresponding to the UE comprises:
receiving, by the first fixed network device, the packet sent by the UE through a tunnel, wherein the tunnel is located between the first base station and the first fixed network device;
deleting, by the first fixed network device, a first tunnel packet header in the packet sent by the LTE, to obtain a first update packet, wherein the first tunnel packet header is used to transmit, through the tunnel, the packet sent by the LTE from the first base station to the first fixed network device; and
forwarding, by the first fixed network device, the first update packet based on the user entry corresponding to the UE.

10. The method according to claim 9, wherein the first fixed network device corresponds to a first public network address, the UE corresponds to a private network address allocated by the 5GC-CP device, and before the forwarding, by the first fixed network device, the first update packet based on the user entry corresponding to the UE, the method further comprises:
translating, by the first fixed network device, a source Internet protocol IP address in the first update packet from the private network address into the first public network address.

11. The method according to claim 9, wherein the LTE corresponds to a private network address allocated by the 5GC-CP device, and the forwarding, by the first fixed network device, the first update packet based on the user entry corresponding to the UE comprises:
sending, by the first fixed network device based on the user entry corresponding to the UE, the first update packet to a target device, wherein the target device is configured to: translate a source Internet protocol IP address in the first update packet from the private network address into a second public network address corresponding to a third fixed network device, and then forward the first update packet, wherein the target device comprises the third fixed network device or a network address translation NAT device.

12. The method according to claim 8, wherein the packet related to the UE comprises a packet sent to the UE, and the forwarding, by the first fixed network device, a packet related to the UE based on the user entry corresponding to the UE comprises:
receiving, by the first fixed network device, the packet sent to the UE;
adding, by the first fixed network device, a second tunnel packet header to the packet sent to the LTE, to obtain a second update packet, wherein the second tunnel packet header is used to transmit, through a tunnel, the packet sent to the UE from the first fixed network device to the first base station, and the tunnel is located between the first base station and the first fixed network device; and
forwarding, by the first fixed network device, the second update packet to the UE through the tunnel.

13. The method according to any one of claims 8 to 12, wherein the method further comprises:
receiving, by the first fixed network device, control information sent by the 5GC-CP device, performing traffic control on the LTE based on the control information, obtaining traffic statistics information of the UE, and sending the traffic statistics information to the 5GC-CP device, wherein the traffic statistics information is used by the 5GC-CP device to perform traffic management.

14. The method according to any one of claims 8 to 13, wherein the first fixed network device comprises a broadband network gateway BNG device or a metropolitan area network edge device.

15. The method according to claim 14, wherein the first fixed network device comprises a broadband network gateway user plane BNG-UP device, and the receiving, by a first fixed network device, a user entry that corresponds to user equipment LTE and that is delivered by a 5th generation mobile communication technology core 5GC-control plane CP device comprises:
receiving, by the BNG-UP device, the user entry that corresponds to the UE and that is delivered by the BNG-CP device.

16. A communication system, wherein the system comprises a 5th generation mobile communication technology core 5GC-control plane CP device and a first fixed network device;
the 5GC-CP device is configured to: determine that user equipment UE is of a first type, and deliver a user entry corresponding to the UE to the first fixed network device, wherein the first fixed network device is a fixed network device corresponding to a first base station accessed by the UE; and
the first fixed network device is configured to forward a packet related to the LTE based on the user entry corresponding to the UE.

17. The system according to claim 16, wherein the 5GC-CP device is further configured to: determine that the UE is of a second type, and deliver the user entry corresponding to the LTE to a 5GC-user plane UP device; and
the 5GC-UP device is configured to forward a packet related to the UE based on the user entry corresponding to the UE.

18. The system according to claim 16 or 17, wherein the 5GC-CP device is further configured to: when detecting that a base station accessed by the LTE is switched from the first base station to a second base station, determine a second fixed network device corresponding to the second base station, and deliver the user entry corresponding to the UE to the second fixed network device; and
the second fixed network device is configured to forward the packet related to the UE based on the user entry corresponding to the UE.

19. The system according to claim 16 or 17, wherein the 5GC-CP device is further configured to: receive a user entry obtaining request sent by a second fixed network device, and send the user entry corresponding to the LTE to the second fixed network device based on the user entry obtaining request, wherein the second fixed network device is a fixed network device corresponding to a second base station to which the LTE is handed over from the accessed first base station; and
the second fixed network device is configured to forward a packet related to the LTE based on the user entry corresponding to the UE.

20. The system according to claim 16, wherein the packet related to the UE comprises a packet sent by the UE, the first fixed network device is configured to receive, through a tunnel, the packet sent by the LTE, and the tunnel is located between the first base station and the first fixed network device;
the first fixed network device is configured to delete a first tunnel packet header in the packet sent by the LTE, to obtain a first update packet, wherein the first tunnel packet header is used to transmit, through the tunnel, the packet sent by the UE from the first base station to the first fixed network device; and
the first fixed network device is configured to forward the first update packet based on the user entry corresponding to the UE.

21. The system according to claim 20, wherein the first fixed network device corresponds to a first public network address, the UE corresponds to a private network address allocated by the 5GC-CP device, and the first fixed network device is further configured to translate a source Internet protocol IP address in the first update packet from the private network address into the first public network address.

22. The system according to claim 16, wherein the UE corresponds to a private network address allocated by the 5GC-CP device, and the first fixed network device is configured to send a first update packet to a target device based on the user entry corresponding to the UE, wherein the target device comprises a third fixed network device or a network address translation NAT device; and
the target device is configured to receive the first update packet, translate a source Internet protocol IP address in the first update packet from the private network address into a second public network address corresponding to the third fixed network device, and then forward the first update packet, wherein the third fixed network device is a fixed network device that has forwarded a packet sent by the UE.

23. The system according to claim 16, wherein the packet related to the UE comprises a packet sent to the UE, and the first fixed network device is configured to receive the packet sent to the UE;
the first fixed network device is configured to add a second tunnel packet header to the packet sent to the UE, to obtain a second update packet, wherein the second tunnel packet header is used to transmit, through a tunnel, the packet sent to the UE from the first fixed network device to the first base station, and the tunnel is located between the first base station and the first fixed network device; and
the first fixed network device is configured to forward the second update packet to the UE through the tunnel.

24. The system according to any one of claims 16 and 18 to 23, wherein the first fixed network device is configured to: receive control information sent by the 5GC-CP device, perform traffic control on the UE based on the control information, obtain traffic statistics information of the UE, and send the traffic statistics information to the 5GC-CP device; and
the 5GC-CP device is configured to perform traffic management based on the traffic statistics information.

25. The system according to any one of claims 16 and 18 to 24, wherein the first fixed network device comprises a broadband network gateway BNG device or a metropolitan area network edge device.

26. The system according to claim 25, wherein the first fixed network device comprises a broadband network gateway user plane BNG-UP device, and the 5GC-CP device is configured to deliver the user entry corresponding to the UE to the BNG-CP device; and
the BNG-CP is configured to deliver the user entry corresponding to the UE to the BNG-UP device.

27. A communication apparatus, wherein the apparatus comprises:
a determining module, configured to determine, by a 5th generation mobile communication technology core 5GC-control plane CP device, that user equipment UE is of a first type; and
a delivering module, configured to deliver, by the 5GC-CP device, a user entry corresponding to the UE to a first fixed network device, wherein the first fixed network device is a fixed network device corresponding to a first base station accessed by the UE.

28. The apparatus according to claim 27, wherein the determining module is further configured to: when the 5GC-CP device detects that a base station accessed by the UE is switched from the first base station to a second base station, determine, by the 5GC-CP device, a second fixed network device corresponding to the second base station; and
the delivering module is further configured to: deliver, by the 5GC-CP device to the second fixed network device, the user entry corresponding to the UE.

29. The apparatus according to claim 27, wherein the apparatus further comprises:
a receiving module, configured to: receive, by the 5GC-CP device, a user entry obtaining request sent by a second fixed network device, wherein the second fixed network device is a fixed network device corresponding to a second base station to which the UE is handed over from the accessed first base station; and
the delivering module is further configured to: send, by the 5GC-CP device based on the user entry obtaining request, the user entry corresponding to the UE to the second fixed network device.

30. The apparatus according to any one of claims 27 to 29, wherein the delivering module is further configured to: send, by the 5GC-CP device, control information to the first fixed network device; and receive, by the 5GC-CP device, traffic statistics information returned by the first fixed network device based on the control information, and perform traffic management based on the traffic statistics information.

31. The apparatus according to any one of claims 27 to 30, wherein the first fixed network device comprises a broadband network gateway BNG device or a metropolitan area network edge device.

32. The apparatus according to claim 31, wherein the first fixed network device comprises a broadband network gateway user plane BNG-UP device, and the delivering module is configured to: deliver, by the 5GC-CP device, the user entry corresponding to the UE to the BNG-CP device, and send, by using the BNG-CP device, the user entry corresponding to the UE to the BNG-UP device.

33. The apparatus according to claim 27, wherein the determining module is further configured to: determine, by the 5GC-CP device, that the UE is of a second type; and
the delivering module is configured to: deliver, by the 5GC-CP device to a 5GC-user plane UP device, the user entry corresponding to the UE.

34. A communication apparatus, wherein the apparatus comprises:
a receiving module, configured to receive, by a first fixed network device, a user entry that corresponds to user equipment LTE and that is delivered by a 5th generation mobile communication technology core 5GC-control plane CP device, wherein the first fixed network device is a fixed network device corresponding to a first base station accessed by the UE, and the LTE is of a first type; and
a forwarding module, configured to forward, by the first fixed network device, a packet related to the UE based on the user entry corresponding to the UE.

35. The apparatus according to claim 34, wherein the packet related to the UE comprises a packet sent by the UE, and the forwarding module is configured to: receive, by the first fixed network device through a tunnel, the packet sent by the UE, wherein the tunnel is located between the first base station and the first fixed network device; delete, by the first fixed network device, a first tunnel packet header in the packet sent by the UE, to obtain a first update packet, wherein the first tunnel packet header is used to transmit, through the tunnel, the packet sent by the LTE from the first base station to the first fixed network device; and forward, by the first fixed network device, the first update packet based on the user entry corresponding to the UE.

36. The apparatus according to claim 35, wherein the first fixed network device corresponds to a first public network address, the UE corresponds to a private network address allocated by the 5GC-CP device, and the forwarding module is further configured to: translate, by the first fixed network device, a source Internet protocol IP address in the first update packet from the private network address into the first public network address.

37. The apparatus according to claim 35, wherein the UE corresponds to a private network address allocated by the 5GC-CP device, and the forwarding module is configured to: send, by the first fixed network device, the first update packet to a target device based on the user entry corresponding to the UE, wherein the target device is configured to translate a source Internet protocol IP address in the first update packet from the private network address into a second public network address corresponding to a third fixed network device, and then forward the first update packet, wherein the target device comprises the third fixed network device or a network address translation NAT device.

38. The apparatus according to claim 34, wherein the packet related to the UE comprises a packet sent to the UE, and the forwarding module is configured to: receive, by the first fixed network device, the packet sent to the UE; add, by the first fixed network device, a second tunnel packet header to the packet sent to the UE, to obtain a second update packet, wherein the second tunnel packet header is used to transmit, through a tunnel, the packet sent to the UE from the first fixed network device to the first base station, and the tunnel is located between the first base station and the first fixed network device; and forward, by the first fixed network device, the second update packet to the UE through the tunnel.

39. The apparatus according to any one of claims 34 to 38, wherein the receiving module is further configured to: receive, by the first fixed network device, control information sent by the 5GC-CP device, perform traffic control on the LTE based on the control information, obtain traffic statistics information of the UE, and send the traffic statistics information to the 5GC-CP device, wherein the traffic statistics information is used by the 5GC-CP device to perform traffic management.

40. The apparatus according to any one of claims 34 to 39, wherein the first fixed network device comprises a broadband network gateway BNG device or a metropolitan area network edge device.

41. The apparatus according to claim 40, wherein the first fixed network device comprises a broadband network gateway user plane BNG-UP device, and the receiving module is configured to: receive, by the BNG-UP device, the user entry that corresponds to the UE and that is delivered by the BNG-CP device.

42. A communication device, wherein the device comprises a memory and a processor, the memory stores at least one instruction, and the at least one instruction is loaded and executed by the processor, to enable the device to implement the communication method according to any one of claims 1 to 7.

43. A communication device, wherein the device comprises a memory and a processor, the memory stores at least one instruction, and the at least one instruction is loaded and executed by the processor, to enable the device to implement the communication method according to any one of claims 8 to 15.

44. A computer-readable storage medium, wherein the computer-readable storage medium stores at least one instruction, and the instruction is loaded and executed by a processor, to enable a computer to implement the communication method according to any one of claims 1 to 7.

45. A computer-readable storage medium, wherein the computer-readable storage medium stores at least one instruction, and the instruction is loaded and executed by a processor, to enable a computer to implement the communication method according to any one of claims 8 to 15.

46. A communication method, wherein the method comprises:
determining, by a 5th generation mobile communication technology core 5GC-control plane CP device, that user equipment UE is of a first type;
delivering, by the 5GC-CP device, a user entry corresponding to the UE to a first fixed network device, wherein the first fixed network device is a fixed network device corresponding to a first base station accessed by the UE; and
forwarding, by the first fixed network device, a packet related to the UE based on the user entry corresponding to the UE.
